# EUROPÄISCHE PATENTSCHRIFT

(11) **EP 2 997 731 B1**
(45) Veröffentlichungstag und Bekanntmachung des Hinweises auf die Patenterteilung: **28.11.2018**
(21) Anmeldenummer: 13729593.7
(22) Anmeldetag: 17.05.2013
(51) Int. Cl.: H04N 13/305, H04N 13/31, H04N 13/349, H04N 13/366, H04N 13/317

(54) **VERFAHREN ZUM WIEDERGEBEN VON BILDINFORMATIONEN UND AUTOSTEREOSKOPISCHER BILDSCHIRM**
METHOD FOR REPRODUCING IMAGE INFORMATION, AND AUTOSTEREOSCOPIC SCREEN
PROCÉDÉ DE REPRODUCTION D'INFORMATIONS D'IMAGE ET ÉCRAN AUTO-STÉRÉOSCOPIQUE

(43) Veröffentlichungstag der Anmeldung: 23.03.2016
(73) Patentinhaber: Fraunhofer Gesellschaft zur Förderung der angewandten Forschung e.V., 80686 München (DE)
(72) Erfinder: DE LA BARRE, René, 09648 Mittweida (DE); JURK, Silvio, 10247 Berlin (DE)
(74) Vertreter: Pfenning, Meinig & Partner mbB
(86) Internationale Anmeldenummer: PCT/EP2013/001509
(87) Internationale Veröffentlichungsnummer: WO 2014/183774

(56) Entgegenhaltungen:
- EP-A1- 1 122 957
- EP-A1- 2 472 889

## Beschreibung

Die Erfindung betrifft ein Verfahren zum Wiedergeben von Bildinformationen auf einem autostereoskopischen Bildschirm sowie einen zur Durchführung dieses Verfahrens geeigneten autostereoskopischen Bildschirm.

Dabei betrifft die Erfindung die Verwendung eines Bildschirms an sich bekannter Art, die als autostereoskopische Bildschirme bekannt sind und dazu verwendet werden, 3D-Bilder so darzustellen, dass sie ohne spezielle Brillen dreidimensional wahrgenommen werden können. Solche Bildschirme weisen eine Pixelmatrix mit einer Vielzahl von Pixeln sowie ein vor der Pixelmatrix angeordnetes optisches Raster auf, wobei die Pixel der Pixelmatrix so angeordnet sind, dass sie eine Vielzahl von äquidistant nebeneinander angeordneten Reihen mit einer vertikalen oder gegenüber einer Vertikalen geneigten Reihenrichtung bilden, und wobei das optische Raster eine Schar von parallel zu den Reihen orientierten und äquidistant nebeneinander angeordneten streifenförmigen Strukturen aufweist und von den Pixeln ausgehendem Licht jeweils mindestens eine definierte Ausbreitungsebene vorgibt, die aus einer definierten horizontalen Ausbreitungsrichtung und der Reihenrichtung aufgespannt wird.

In der Druckschrift EP 2 472 889 A1 in ein aus dem Stand der Technik bekannter autostereoskopischer Bildschirm dieser Art und ein damit ausgeführtes Verfahren zum Wiedergeben von Bildinformationen beschrieben. Dort wird auch erläutert, wie eine Ansteuerung des Bildschirms an Änderungen der Kopfposition eines Betrachters angepasst werden kann, indem Intensitätsschwerpunkte von durch jeweils mehrere Subpixel gebildeten Bildpunkten seitlich verschoben werden.

Eine besondere Klasse autostereoskopischer Bildschirme, die als "light field displays" bezeichnet werden, zeichnen sich durch eine bestimmte Geometrie aus. Bei diesen Bildschirmen entspricht eine durch einen seitlichen Versatz benachbarter streifenförmiger Strukturen definierte Periodenlänge des optischen Rasters einem ganzzahligen Vielfachen eines seitlichen Versatzes der unmittelbar benachbarten Reihen von Pixeln, wobei dieser Faktor größer als zwei ist. Ein solcher Bildschirm ist z.B. von H. Hoshino, F. Okano, H. Isono und I. Yuyama in J. Opt. Soc. Am. A 15, 2059, 1998 beschrieben worden.

Die Reihen eines solchen Matrixbildschirms können in zyklischer Reihenfolge auf eine dem ganzzahligen Verhältnis zwischen Reihenabstand und Rasterperiode entsprechende Anzahl von Kanälen verteilt werden. Wegen der besonderen Geometrie wird das vom Matrixbildschirm ausgehende Licht dann durch das Raster so gelenkt oder beschränkt, dass von den Pixeln jedes dieser Kanäle ausgehendes Licht hinter dem Raster parallel gerichtete Strahlen oder Lichtbündel bildet. Ein bestimmungsgemäßer Gebrauch des Bildschirms sieht nun vor, dass jeder dieser Kanäle mit Bildinformationen genau einer Ansicht aus einer Vielzahl von Ansichten angesteuert wird, die Parallelprojektionen einer Szene aus geringfügig abweichenden Richtungen entsprechen. Auf den Pixeln jedes dieser Kanäle wird dann also genau eine dieser Ansichten wiedergegeben. In einem Betrachtungsraum vor dem Bildschirm entsteht dadurch ein Lichtfeld, in dem sich ein Betrachter des Bildschirms bewegen kann und mit beiden Augen zwei Bilder sieht, die sich jeweils als Mischung aus verschiedenen der parallelprojizierten Ansichten ergeben. Diese Bilder entsprechen dann zwei zentralprojizierten Bildern, die sich als stereoskopische Halbbilder zu einem Stereobild ergänzen, so dass der Betrachter die Szene dreidimensional wahrnimmt, und zwar aus einer von seiner Position abhängigen Richtung. Diese Art der Bildwiedergabe ist als "Integral Imaging" bekannt. Auf diese Weise lassen sich allerdings nur verhältnismäßig geringe Bildtiefen realistisch wiedergeben.

Der vorliegenden Erfindung liegt die Aufgabe zugrunde, Maßnahmen vorzuschlagen, die eine Darstellung von 3D-Bildern mit vergleichsweise großer Bildtiefe mit einem Bildschirm beschriebener Art möglich machen.

Diese Aufgabe wird erfindungsgemäß gelöst durch ein Verfahren zum Wiedergeben von Bildinformationen auf einem autostereoskopischen Bildschirm mit den Merkmalen des Hauptanspruchs sowie durch einen autostereoskopischen Bildschirm mit den Merkmalen des Nebenanspruchs. Vorteilhafte Ausgestaltungen und Weiterentwicklungen der Erfindung ergeben sich mit den Merkmalen der Unteransprüche.

Vorgeschlagen wird also ein Verfahren zum Wiedergeben von Bildinformationen auf einem autostereoskopischen Bildschirm, der wie eingangs beschrieben eine Pixelmatrix mit einer Vielzahl von Pixeln sowie ein vor der Pixelmatrix angeordnetes optisches Raster aufweist, wobei die Pixel der Pixelmatrix so angeordnet sind, dass sie eine Vielzahl von äquidistant nebeneinander angeordneten Reihen mit einer vertikalen oder gegenüber einer Vertikalen geneigten Reihenrichtung bilden, und wobei das optische Raster eine Schar von parallel zu den Reihen orientierten und äquidistant nebeneinander angeordneten streifenförmigen Strukturen aufweist und von den Pixeln ausgehendem Licht jeweils mindestens eine definierte Ausbreitungsebene vorgibt, die aus einer definierten horizontalen Ausbreitungsrichtung und der Reihenrichtung aufgespannt wird, wobei eine durch einen seitlichen Versatz benachbarter streifenförmiger Strukturen definierte Periodenlänge des optischen Rasters um einen ganzzahligen Faktor n größer ist als ein seitlicher Versatz der unmittelbar benachbarten Reihen, wobei n größer als zwei ist-typischerweise deutlisch größer als zwei, beispielsweise acht oder größer. Bei dem vorgeschlagenen Verfahren wird die Pixelmatrix für eine autostereoskopische Betrachtung eines 3D-Bildes aus einem definierten Betrachtungsabstand vor dem Bildschirm angesteuert, wobei das Verfahren folgende Schritte umfasst:
- Zuordnen jeweils eines ersten Ortskoordinatenwertes und eines zweiten Ortskoordinatenwertes zu jeder der genannten Reihen, wobei der erste Ortskoordinatenwert jeweils einen Ort auf einer im Betrachtungsabstand vor dem Bildschirm horizontal orientierten Koordinatenachse angibt, an dem die durch das optische Raster vorgegebene definierte Ausbreitungsebene des von der jeweiligen Reihe ausgehenden Lichts oder eine dieser Ausbreitungsebenen diese Koordinatenachse schneidet, und wobei der zweite Ortskoordinatenwert eine Lage der jeweiligen Reihe oder der streifenförmigen Struktur des optischen Rasters, durch die das von den Pixeln dieser Reihe ausgehende Licht fällt, in lateraler Richtung angibt,
- für jede der Reihen Berechnen jeweils eines Auszugs eines Bildes durch Bildsynthese, wobei dieses Bild jeweils durch eine Perspektive des wiederzugebenden 3D-Bildes aus einer Position gegeben ist, die durch den der jeweiligen Reihe zugeordneten ersten Ortskoordinatenwert definiert ist, und wobei der Auszug jeweils durch einen Streifen dieses Bildes definiert ist, der in diesem Bild eine seitliche Lage hat, die dem der jeweiligen Reihe zugeordneten zweiten Ortskoordinatenwert entspricht, und
- Ansteuern der Pixel der Pixelmatrix derart, dass in jede der Reihen der so für diese Reihe berechnete Auszug eingeschrieben wird.

Dadurch ergibt sich eine Situation, die der Darstellung von 3D-Bildern auf herkömmlichen sogenannten Multiview-Displays vergleichbar sind, bei denen eine bestimmte Anzahl stereoskopischer Halbbilder aus jeweils einer von mehreren seitlich versetzten Betrachtungszonen in einem von der Geometrie des verwendeten Displays abhängigen Betrachtungsentfernung vor dem Display sichtbar sind, die sich paarweise zu einem dreidimensional wahrnehmbaren Stereobild ergänzen. Die hier vorgeschlagenen Maßnahmen ermöglichen eine von ihrer Wirkung damit vergleichbare Bildwiedergabe, obwohl der verwendete Bildschirm durch das ganzzahlige Verhältnis zwischen dem Abstand der Reihen von Pixeln einerseits und der Periodenlänge des optischen Rasters andererseits auf den ersten Blick nicht für eine derartige Bildwiedergabe geeignet erscheint. Dadurch können insbesondere 3D-Bilder mit praktisch beliebiger Bildtiefe wiedergegeben werden, anders als beim oben beschriebenen sogenannten "Integral Imaging", für das Bildschirme des hier verwendeten Typs eigentlich konstruiert sind. Als zusätzlicher Vorteil ergibt sich, dass der Betrachtungsabstand anders als bei einem herkömmlichen Multiview-Display zumindest innerhalb gewisser Grenzen frei gewählt werden kann. Das 3D-Bild ist dabei zumindest aus einem im Betrachtungsabstand vor dem Bildschirm liegenden Beobachtungsraum gewisser Breite mit guter Qualität sichtbar und autostereoskopisch als dreidimensional wahrnehmbar. Dabei kann sich ein Betrachter innerhalb dieses Beobachtungsraums insbesondere seitlich frei bewegen, wobei sich lediglich die wahrgenommene Perspektive der seitlichen Bewegung entsprechend verändert, ohne dass der dreidimensionale Eindruck verloren geht. Der dreidimensionale Eindruck kommt dabei wie beim herkömmlichen Multiview-Display dadurch zustande, dass zwei Augen des Betrachters zwei verschiedene Bilder sehen, die unterschiedliche Perspektiven wiedergeben und zumindest fast genau zwei stereoskopischen Halbbildern entsprechen, die sich zu einem Stereobild ergänzen. Zwar bestehen diese beiden Bilder selbst jeweils aus Auszügen geringfügig unterschiedlicher Perspektiven, die Perspektivunterschiede zwischen diesen Auszügen bleiben aber so klein, dass sie nicht störend ins Gewicht fallen.

Dementsprechend vorteilhaft ist auch der mit der vorliegenden Erfindung vorgeschlagene autostereoskopischer Bildschirm, mit dem in beschriebener Weise Bildinformationen wiedergegeben werden können. Dieser autostereoskopische Bildschirm weist eine Pixelmatrix mit einer Vielzahl von Pixeln, ein vor der Pixelmatrix angeordnetes optisches Raster und eine Steuereinheit zum Ansteuern der Pixelmatrix aufweist, wobei die Pixel der Pixelmatrix so angeordnet sind, dass sie eine Vielzahl von äquidistant nebeneinander angeordneten Reihen mit einer vertikalen oder gegenüber einer Vertikalen geneigten Reihenrichtung bilden, wobei das optische Raster eine Schar von parallel zu den Reihen orientierten und äquidistant nebeneinander angeordneten streifenförmigen Strukturen aufweist und von den Pixeln ausgehendem Licht jeweils mindestens eine definierte Ausbreitungsebene vorgibt, die aus einer definierten horizontalen Ausbreitungsrichtung und der Reihenrichtung aufgespannt wird, wobei eine durch einen seitlichen Versatz benachbarter streifenförmiger Strukturen definierte Periodenlänge des optischen Rasters um einen ganzzahligen Faktor n größer ist als ein seitlicher Versatz der unmittelbar benachbarten Reihen, wobei n größer als zwei ist - typischerweise deutlich größer als zwei - und wobei die Steuereinheit eingerichtet, die Pixelmatrix für eine autostereoskopische Betrachtung eines 3D-Bildes aus einem Betrachtungsabstand vor dem Bildschirm anzusteuern und dazu folgende Schritte durchzuführen:
- Berechnen oder Auswerten einer Zuordnung, die jeder der genannten Reihen jeweils einen ersten Ortskoordinatenwert und einen zweiten Ortskoordinatenwert zuordnet, wobei der erste Ortskoordinatenwert jeweils einen Ort auf einer im Betrachtungsabstand vor dem Bildschirm horizontal orientierten Koordinatenachse angibt, an dem die durch das optische Raster vorgegebene definierte Ausbreitungsebene des von der jeweiligen Reihe ausgehenden Lichts oder eine dieser Ausbreitungsebenen diese Koordinatenachse schneidet, und wobei der zweite Ortskoordinatenwert eine Lage der jeweiligen Reihe oder der streifenförmigen Struktur des optischen Rasters, durch die das von den Pixeln dieser Reihe ausgehende Licht fällt, in lateraler Richtung angibt,
- für jede der Reihen Berechnen jeweils eines Auszugs eines Bildes durch Bildsynthese, wobei dieses Bild jeweils durch eine Perspektive des wiederzugebenden 3D-Bildes aus einer Position gegeben ist, die durch den der jeweiligen Reihe zugeordneten ersten Ortskoordinatenwert definiert ist, und wobei der Auszug jeweils durch einen Streifen dieses Bildes definiert ist, der in diesem Bild eine seitliche Lage hat, die dem der jeweiligen Reihe zugeordneten zweiten Ortskoordinatenwert entspricht, und
- Ansteuern der Pixel der Pixelmatrix derart, dass in jede der Reihen der für diese Reihe berechnete Auszug eingeschrieben wird.

Es sei darauf hingewiesen, dass die Koordinatenachse typischerweise natürlich gerade und parallel zu einer durch die Pixelmatrix oder das optische Raster definierten Ebene verläuft. Beides ist allerdings nicht unbedingt erforderlich. So könnte die Koordinatenachse unter Umständen auch gegenüber dem Bildschirm schräg liegen. Das hätte zur Folge, dass der Beobachtungsraum, aus dem das 3D-Bild autostereoskopisch sichtbar ist, an einem linken Ende näher an den Bildschirm herankommt oder weiter vom Bildschirm entfernt ist als an einem rechten Ende. Auch könnte die Koordinatenachse durch eine Linie mit gekrümmtem Verlauf gegeben sein, wobei die ersten Ortskoordinatenwerte dann durch eine eindimensionale Parametrisierung dieser Linie definiert sind und jeweils einen Ort auf dieser Linie definieren. Auch eine solche Linie sei also als Koordinatenachse im weiteren Sinne des Wortes verstanden. Typischerweise ist die Steuereinheit eingerichtet, beim Berechnen der Auszüge Helligkeitswerte von Bildpunkten der Auszüge zu ermitteln und die Auszüge in die Reihen der Pixelmatrix einzuschreiben durch Ansteuern der die jeweilige Reihe bildenden Pixel mit den für die Bildpunkte des jeweiligen Auszugs ermittelten Helligkeitswerten. Das Berechnen der Auszüge kann also das Ermitteln von Helligkeitswerten von Bildpunkten der Auszüge beinhalten, wobei die Auszüge in die Reihen der Pixelmatrix eingeschrieben werden, indem die die jeweilige Reihe bildenden Pixel mit den für die Bildpunkte des jeweiligen Auszugs ermittelten Helligkeitswerten angesteuert werden. Die zum Berechnen der Auszüge verwendete Bildsynthese, auch als Rendern bezeichnet, kann in an sich bekannter Weise durchgeführt werden. Dazu können also herkömmliche Render-Verfahren verwendet werden, wobei sich gegenüber herkömmlichen Anwendungen solcher Render-Verfahren oder Bildsynthese Verfahren kein rechnerischer Mehraufwand ergibt, weil die verhältnismäßig große Zahl von verschiedenen Bildern unterschiedlicher Perspektive jeweils nicht vollständig berechnet werden müssen, sondern es vielmehr genügt, wenn die genannten Auszüge, also jeweils nur verhältnismäßig kleine Teile dieser Bilder, berechnet werden.

Selbstverständlich kann die Pixelmatrix Pixel unterschiedlicher Grundfarben - typischerweise rote, grüne und blaue Pixel - aufweisen, die dementsprechend mit farbabhängigen Helligkeitswerten angesteuert werden können und von denen typischerweise drei zu einer farbigen bzw. farbneutralen Pixelgruppe zusammengefasst werden können. Die Pixelmatrix kann z.B. durch einen Flüssigkristall-Bildschirm oder einen LED-Bildschirm oder einen Plasmabildschirm gegeben sein. Die Pixel der Pixelmatrix können dabei in einer Vielzahl von Zeilen angeordnet sein, wobei die genannten Reihen von Pixeln typischerweise aus jeder der Zeilen jeweils höchstens ein Pixel enthalten. Dabei können die Reihen unter Umständen so verschachtelt sein, dass der genannte seitliche Versatz unmittelbar benachbarter Reihen sogar kleiner ist als ein seitlicher Versatz unmittelbar benachbarter Pixel in einer Zeile der Pixelmatrix. Bei dem optische Raster wiederum kann es sich beispielsweise um ein Linsenraster oder ein Schlitzraster handeln, wobei die streifenförmigen Strukturen durch Zylinderlinsen oder zylinderlinsenartige Linsen oder durch transparente Schlitze gegeben sein können.

Das Zuordnen der ersten Ortskoordinatenwerte zu den Reihen erfolgt so, dass den verschiedenen Reihen eine Anzahl von typischerweise sogar weit mehr als n verschiedenen ersten Ortskoordinatenwerten zugeordnet wird, so dass die für die Reihen berechneten Auszüge aus einer entsprechenden Anzahl von mehr als n verschiedenen Bildern mit einer entsprechenden Anzahl von mehr als n verschiedenen Perspektiven berechnet werden. Es spricht also nichts dagegen, die erste Ortskoordinate den geometrischen Eigenschaften des Bildschirms entsprechend mit ausgesprochen hoher Genauigkeit zu ermitteln. Auch bei dem vorgeschlagenen autostereoskopischen Bildschirm ordnet die genannte Zuordnung den verschiedenen Reihen eine Anzahl von mehr als n verschiedenen ersten Ortskoordinatenwerten zu, so dass die Steuereinheit eingerichtet ist, die Auszüge für die verschiedenen Reihen der Pixelmatrix aus einer entsprechenden Anzahl von mehr als n verschiedenen Bildern einer entsprechenden Anzahl von mehr als n verschiedenen Perspektiven zu berechnen. Je genauer die ersten Ortskoordinatenwerte dabei bestimmt werden und je feiner gestufte Zwischenwerte zugelassen werden, desto besser wird die dabei realisierbare Bildqualität sein. Die Ermittlung der ersten Ortskoordinatenwerte ist dabei unabhängig von der geforderten Genauigkeit eine einfache zu lösende strahlengeometrische Aufgabe. Natürlich werden die Pixel eine unter Umständen nicht vernachlässigbare endliche Ausdehnung haben. Auch wird das von den Pixeln ausgehende und durch das optische Raster fallende Licht wegen der endlichen seitlichen Ausdehnung der streifenförmigen Strukturen normalerweise immer geringfügig seitlich aufgefächert sein. Zur Bestimmung der genannten Ausbreitungsebenen und Ausbreitungsrichtungen sollte dann jeweils von einem mittig im jeweiligen Pixel liegenden Punkt - beispielsweise einem Flächenschwerpunkt des Pixels - ausgegangen werden, wobei die Ausbreitungsrichtung so definiert sei, dass die durch die Ausbreitungsrichtung und durch die Reihenrichtung definierte Ausbreitungsebene mittig in einem von dem jeweiligen Pixel ausgehenden Lichtfächer liegt.

Typischerweise gibt das optische Raster dem von den Pixeln jeder Reihe oder zumindest den Pixeln einiger der Reihen ausgehenden Licht jeweils eine endliche Zahl verschiedener Ausbreitungsebenen mit dementsprechend verschiedenen horizontalen Ausbreitungsrichtungen vor, die sich dadurch ergeben, dass das Licht durch verschiedene der streifenförmigen Strukturen des optischen Rasters fällt. Zum Bestimmen des der jeweiligen Reihe zugeordneten ersten Ortskoordinatenwerts kann aus diesen Ausbreitungsebenen jeweils eine Ausbreitungsrichtung ausgewählt werden durch Einhalten einer Nebenbedingung, die verlangt, dass der erste Ortskoordinatenwert innerhalb eines definierten Intervalls liegt. Bei einer zweckmäßigen Ausführung des vorgeschlagenen autostereoskopischen Bildschirms ist die erwähnte Zuordnung also derart, dass der der jeweiligen Reihe zugeordnete erste Ortskoordinatenwert innerhalb eines definierten Intervalls liegt. Zwei Grenzen dieses Intervalls auf der Koordinatenachse definieren dabei seitliche Begrenzungen des oben genannten Beobachtungsraums, aus dem das 3D-Bild autostereoskopisch gesehen werden kann.

Typische Ausführungen des vorgeschlagenen Verfahrens bzw. des vorgeschlagenen autostereoskopischen Bildschirms sehen vor, dass die ersten Ortskoordinatenwerte den Reihen so zugeordnet werden, dass die Reihen auf Gruppen von jeweils n oder auch n+1 oder n+2 unmittelbar benachbarten Reihen verteilt sind, innerhalb derer die den Reihen der jeweiligen Gruppe zugeordneten ersten Ortskoordinatenwerte sich von Reihe zu Reihe um eine für alle Gruppen gleiche Ortskoordinatendifferenz unterscheiden, wobei die ersten Ortskoordinatenwerte, die den Reihen jeder dieser Gruppen zugeordnet sind, jeweils ein Koordinatenintervall überspannen, das mindestens n-mal so groß ist wie die genannte Ortskoordinatendifferenz. In der Regel werden die meisten der genannten Gruppen genau n Reihen umfassen, während einige Gruppen aus n+1 oder unter Umständen auch aus n+2 Reihen gebildet sind. Durch Ändern der Aufteilung der Reihen auf die genannten Gruppen kann der Betrachtungsabstand vergrößert oder verkleinert werden und damit der Beobachtungsraum, aus dem die wiedergegebene 3D-Szene in guter Qualität autostereoskopisch sichtbar ist, entweder näher an den Bildschirm herangezogen werden oder in größerer Entfernung vom Bildschirm verschoben werden. Auch seitlich kann der Beobachtungsraum dadurch bei Bedarf verschoben werden.

Innerhalb des genannten Beobachtungsraums ist das 3D-Bild, die in beschriebener Weise wiedergegeben wird, mit verhältnismäßig guter Qualität sichtbar und autostereoskopisch dreidimensional wahrnehmbar. Insbesondere an Rändern dieses Beobachtungsraums können sich jedoch die Bildqualität mindernde Störungen ergeben, die typischerweise als in Reihenrichtung - beispielsweise schräg-verlaufende und parallel nebeneinander liegende Streifen sichtbar werden. Ursache dieser Störungen ist ein Übersprechen zwischen benachbarten Reihen von Pixeln, in denen Auszüge von Bildern stark unterschiedlicher Perspektiven wiedergegeben werden. Bei der beschriebenen Ansteuerung werden auf den nebeneinander liegenden Reihen von Pixeln Auszüge von Parallelprojektionen der 3D-Szene mit sich in den meisten Fällen jeweils nur geringfügig unterscheidenden Perspektiven wiedergegeben. Bei jedem etwa n-ten Reihensprung jedoch ergibt sich ein wesentlich größerer Perspektivsprung - also ein größerer Sprung zwischen den diesen Reihen zugeordneten ersten Ortskoordinatenwerten - in entgegengesetzter Richtung, der zu der genannten Störung führen kann. Nachfolgend wird eine Maßnahme skizziert, die diese Störungen zumindest abzumildern erlaubt. Dabei werden in einige der Reihen gemittelte Intensitätswerte eingeschrieben. Das betrifft vorzugsweise jeweils eine von den unmittelbar benachbarten Reihen, in die Auszüge aus Bildern stark abweichender Perspektive einzuschreiben sind, also die Reihen der Pixelmatrix, bei denen die genannten größeren Perspektivsprünge auftreten. Gemittelt wird dabei gerade zwischen Beiträgen der beiden Bilder mit den Perspektiven, die dem rechten und dem linken Rand des genannten Beobachtungsraums vor dem Bildschirm entsprechen.

Um das zu realisieren, kann es also vorgesehen sein, dass zumindest einige der Reihen, die an einem Rand einer der genannten Gruppen von Reihen liegen, zusätzlich der sich an diesem Rand der Gruppe anschließenden benachbarten Gruppe von Reihen zugeordnet werden und dass diesen Reihen dementsprechend zwei erste Ortskoordinatenwerte zugeordnet werden, die durch zwei der Ausbreitungsebenen definiert werden, wobei für diese Reihen dementsprechend jeweils zwei Auszüge unter Zugrundelegung jeweils eines dieser beiden ersten Ortskoordinatenwerte berechnet werden und wobei die Pixel dieser Reihen jeweils mit einem gemittelten Helligkeitswert angesteuert werden, der sich durch Mitteln von Helligkeitswerten ergibt, die durch diese beiden Auszüge definiert werden. Die Steuereinheit kann also in diesem Fall eingerichtet sein, für jede der letztgenannten Reihen dementsprechend jeweils zwei Auszüge unter Zugrundelegung jeweils eines dieser beiden ersten Ortskoordinatenwerte zu berechnen und die Pixel dieser Reihen jeweils mit einem gemittelten Helligkeitswert anzusteuern, der sich durch Mitteln von Helligkeitswerten ergibt, die durch diese beiden Auszüge definiert werden.

Die genannten gemittelten Helligkeitswerte, mit denen die Pixel der Reihen angesteuert werden, denen zwei erste Ortskoordinatenwerte zugeordnet und für die zwei Auszüge berechnet werden, werden typischerweise jeweils ermittelt als Summe aus einem mit einem ersten Wichtungsfaktor gewichteten ersten Helligkeitswert und einem mit einem zweiten Wichtungsfaktor gewichteten zweiten Helligkeitswert, wobei der erste Helligkeitswert durch einen ersten der zwei Auszüge für das jeweilige Pixel definiert ist und der zweite Helligkeitswert durch den zweiten dieser zwei Auszüge für dasselbe Pixel definiert ist. Natürlich ist es nicht ausgeschlossen, dass beide Wichtungsfaktoren einfach jeweils einen Wert von 0,5 haben. Der erste Wichtungsfaktor und der zweite Wichtungsfaktor können aber unter Umständen auch für jede der betroffenen Reihen von Pixeln jeweils abhängig davon definiert sein, wie nah der jeweilige erste Ortskoordinatenwert an einer Grenze des genannten Intervalls liegt. Dadurch lässt sich eine noch bessere Unterdrückung der erwähnten Störungen erreichen. Und zwar sollte der jeweils für eine der Reihen definierte erste Wichtungsfaktor umso kleiner sein, je näher der erste Ortskoordinatenwert, unter Zugrundelegung dessen der erste Auszug berechnet wird, an einer Intervallgrenze des genannten Intervalls liegt. Der für die jeweilige Reihe definierte zweite Wichtungsfaktor sollte dementsprechend umso kleiner sein, je näher der erste Ortskoordinatenwert, unter Zugrundelegung dessen der zweite Auszug berechnet wird, an einer Intervallgrenze des genannten Intervalls liegt. Dabei wird der zweite Wichtungsfaktor typischerweise umso größer sein, je kleiner der erste Wichtungsfaktor ist, und umgekehrt. Die Wichtungsfaktoren können z.B. so definiert sein, dass sich eine Summe aus dem ersten Wichtungsfaktor und dem zweiten Wichtungsfaktor für jede der betroffenen Reihen von Pixeln jeweils zu eins addieren. Die beschriebene Berechnung oder Ermittlung der gemittelten Helligkeitswerte und der dafür unter Umständen variabel definierten Wichtungsfaktoren kann durch die Steuereinheit erfolgen, die dazu entsprechend programmiert sein kann.

Der Betrachtungsabstand kann, wie schon erwähnt, variabel sein und dazu z.B. abhängig von einem Eingabebefehl oder einem durch eine Trackingeinrichtung gemessenen Wert definiert werden. Dementsprechend kann die Steuereinheit des autostereoskopischen Bildschirms eingerichtet sein, die Pixelmatrix abhängig von einem den Betrachtungsabstand definierenden Eingabebefehl oder durch eine Trackingeinrichtung ermittelten Messergebnis anzusteuern. Es kann also eine Trackingeinrichtung vorgesehen sein, die einen Abstand eines Augenpaares mindestens eines Betrachters vom Bildschirm misst, damit der Betrachtungsabstand entsprechend definiert werden kann. Das Messergebnis kann dann auch dazu verwendet werden, eine seitliche Verschiebung des Beobachtungsraums vorzunehmen, um sicherzustellen, dass sich der Betrachter oder jeder der Betrachter innerhalb des Beobachtungsraums befinden.

Ausführungsbeispiele der Erfindung werden nachfolgend anhand der Figuren 1 bis 5 erläutert. Es zeigt
- Fig. 1: Eine schematische Aufsicht auf einen autostereoskopischen Bildschirm und einen Betrachterraum vor diesem Bildschirm bei einer herkömmlichen Ansteuerung des Bildschirms,
- Fig. 2: eine frontale Ansicht eines Ausschnitts einer Pixelmatrix dieses Bildschirms und eines davor angeordneten optischen Rasters,
- Fig. 3: eine der Fig. 2 entsprechende Darstellung bei einer Abwandlung des Bildschirms,
- Fig. 4: in einer vergrößerte Aufsicht auf einen Ausschnitt des Bildschirms aus Fig. 1 bei der als "Integral Imaging" bezeichneten herkömmlichen Ansteuerung und
- Fig. 5: in einer der Fig. 4 entsprechenden Darstellung eine schematische Aufsicht auf den autostereoskopischen Bildschirm aus Fig. 1 und den Betrachterraum vor diesem Bildschirm bei einer andersartigen Ansteuerung des Bildschirms in einer hier vorgeschlagenen Art.

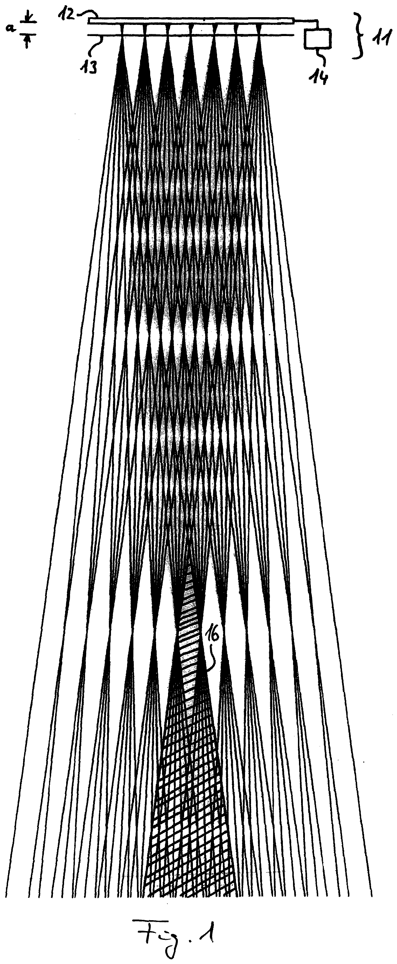

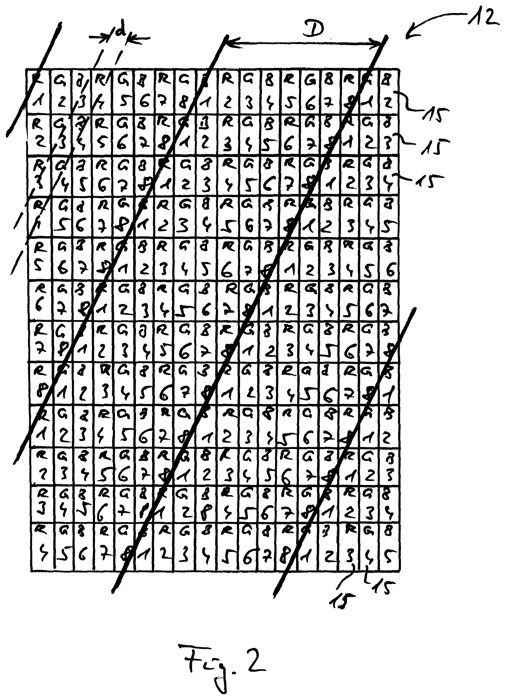

In Fig. 1 ist ein autostereoskopische Bildschirm 11 dargestellt, der eine Pixelmatrix 12, ein in einem Abstand a vor der Pixelmatrix 12 angeordnetes optisches Raster 13 und eine Steuereinheit 14 zum Ansteuern der Pixelmatrix 12 aufweist. Fig. 2 zeigt einen Ausschnitt der Pixelmatrix 12. Gleiche Merkmale sind in den verschiedenen Figuren jeweils mit den gleichen Bezugszeichen versehen und werden nicht im Zusammenhang mit jeder der Figuren erneut erläutert. Wie in Fig. 2 zu erkennen ist, weist die Pixelmatrix 12 eine Vielzahl von Pixeln 15 auf, wobei die Pixel 15 der Pixelmatrix 12 eine Vielzahl von äquidistant nebeneinander angeordneten Reihen mit einer im vorliegenden Fall gegenüber einer Vertikalen geneigten Reihenrichtung bilden. Für zwei dieser Reihen sind in Fig. 2 Lage und Verlauf der jeweiligen Reihe von Pixeln 15 jeweils durch eine gestrichelte Linie gezeigt.

In Fig. 2 ist dabei eine Aufteilung der Pixel 15 auf acht Untermengen veranschaulicht, die bei einer herkömmlichen Verwendung eines Bildschirms 11 dieser Art vorgenommen wird. Bei dieser Aufteilung werden die genannten Reihen von Pixeln 15 in zyklischer Reihenfolge von links nach rechts auf die Untermengen verteilt. Die Untermengen sind dabei von 1 bis 8 durchnummeriert, wobei in Fig. 2 die Pixel 15 jeweils mit einer Zahl von 1 bis 8 versehen sind, die der Nummer der Untermenge entspricht, der das jeweilige Pixel 15 zugeordnet ist. Die schon genannten Reihen werden dabei jeweils durch Pixel jeweils nur einer dieser Untermengen gebildet und enthalten aus jeder Zeile von Pixeln 15 jeweils höchstens ein Pixel 15. Die Nummerierung der Pixel 15 macht den geneigten Verlauf der Reihen gut erkennbar

Im vorliegenden Fall handelt es sich bei den Pixeln 15 um Pixel 15 dreier verschiedener Grundfarben, die in Fig. 2 ihrer jeweiligen Grundfarbe entsprechend mit R für rot, G für grün oder B für Blau gekennzeichnet sind. In Reihenrichtung ergänzen sich dabei jeweils drei übereinander angeordnete Pixel 15 der gleichen Reihe zu einer farbneutralen bzw. zur Wiedergabe jeder beliebigen Farbe geeigneten Pixelgruppe. Selbstverständlich sind auch Abwandlungen denkbar, bei denen mehr als drei Farben zu einer Pixelgruppe gehören oder die Reihen einen vertikalen Verlauf haben, wobei dann die Pixel der verschiedenen Grundfarben entsprechend umsortiert auf der Pixelmatrix 12 anzuordnen sind. Bei der Pixelmatrix 12 kann es sich z.B. um einen Flüssigkristall-Bildschirm, also ein LCD, oder um einen durch eine Leuchtdiodenmatrix gebildeten LED-Bildschirm oder auch um einen Plasmabildschirm handeln.

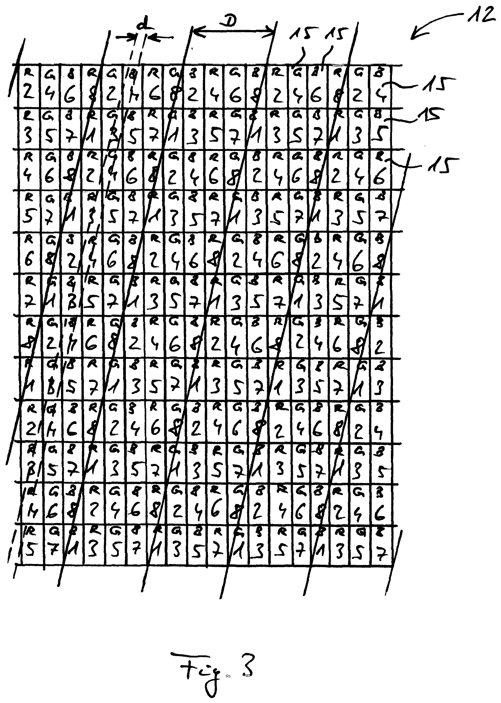

Fig. 3 zeigt in einer der Fig. 2 entsprechenden Darstellung ein anderes Ausführungsbeispiel, bei dem die Pixel 15 der verschiedenen Reihen so verschachtelt sind, dass zwischen den unmittelbar aufeinander folgenden Pixeln 15 einer Reihe jeweils eine Zeile von Pixeln 15 liegt, die kein Pixel 15 dieser Reihe enthält. Im Vergleich zu dem Ausführungsbeispiel aus Fig. 1 führt aber zu einem geringeren seitlichen Versatz d der unmittelbar benachbarten Reihen und dazu, dass diese Reihen etwas weniger gegenüber der Vertikalen geneigt sind. Die weiter unten anhand des Bildschirms 11 aus den Figuren 1 und 2 beschriebene besondere Ansteuerung der Pixelmatrix 12 ist in gleicher Weise auch bei einem Bildschirm der in Fig. 3 gezeigten Art möglich.

Das optische Raster 13 weist eine Schar von parallel zu den Reihen von Pixeln 15 orientierten und äquidistant nebeneinander angeordneten streifenförmigen Strukturen auf, die in Fig. 2 und Fig. 3 jeweils durch durchgezogene Linien angedeutet sind und die von den Pixeln 15 ausgehendem Licht jeweils mindestens eine definierte Ausbreitungsebene vorgeben. Die Ausbreitungsebenen ergeben sich dabei durch eine fächerförmige Ausbreitung des von jedem der Pixel 15 ausgehenden und durch die Strukturen des optischen Rasters 13 fallenden Lichts und werden jeweils aus einer definierten horizontalen Ausbreitungsrichtung und der Reihenrichtung aufgespannt. Eine durch einen seitlichen Versatz benachbarter streifenförmiger Strukturen definierte Periodenlänge D des optischen Rasters 13 ist um einen exakt ganzzahligen Faktor n größer als der seitliche Versatz d der unmittelbar benachbarten Reihen. Der genannte Faktor n beträgt in den vorliegenden Ausführungsbeispielen n=8, so dass D so groß wie das 8-fache des seitlichen Versatzes d unmittelbar benachbarter Reihen von Pixeln. Bei anderen Abwandlungen des beschriebenen Bildschirms 11, insbesondere im Fall einer höher aufgelösten Pixelmatrix 12, könnte natürlich auch eine möglicherweise sogar deutlich größere ganzzahlige Zahl an die Stelle des Faktors acht treten.

Das optische Raster 13 ist im vorliegenden Fall ein Linsenraster, wobei die streifenförmigen Strukturen durch Zylinderlinsen gegeben sind. Bei Abwandlungen des beschriebenen Bildschirms 11 könnten die genannten Strukturen auch durch transparente Schlitze und dementsprechend das optische Raster 13 durch ein Schlitzraster gegeben sein.

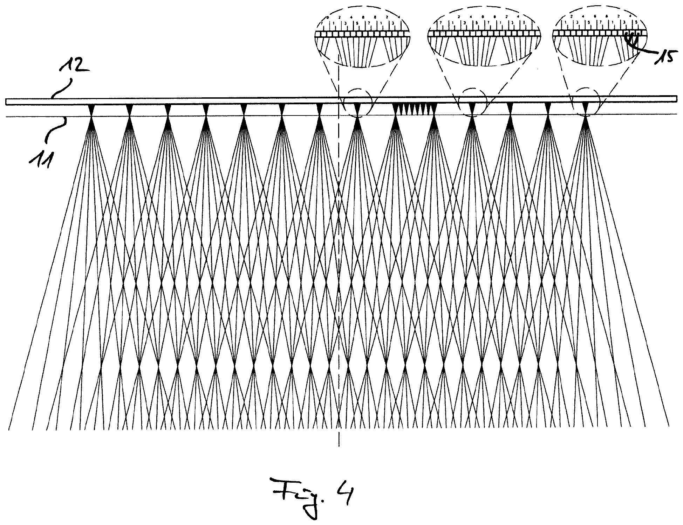

Bei der erwähnten herkömmlichen Verwendung des Bildschirms 11, die unter dem Namen "Integral Imaging" oder "eindimensionales Integral Imaging" bekannt ist, wird auf jeder der genannten Untermengen eine von n - also im vorliegenden Fall acht - verschiedenen Parallelprojektionen der wiederzugebenden 3D-Szene wiedergegeben wird, wobei sich diese Parallelprojektionen durch leicht unterschiedliche Projektionsrichtungen voneinander unterscheiden und von 1 bis 8 durchnummeriert seien. Das ist in Fig. 4 veranschaulicht, die einen Teil des Bildschirms in etwas größerem Maßstab zeigt, wobei drei Ausschnitte der Pixelmatrix jeweils noch einmal vergrößert wiedergegeben sind. In diesen vergrößerten Ausschnitten ist jede der durch den jeweiligen Ausschnitt verlaufenden Reihen von Pixeln 15 jeweils durch ein kleines Quadrat veranschaulicht, wobei die Reihen die Zeichenebene fast senkrecht durchstoßen. Die Quadrate können dabei verstanden werden als jeweils eines der Pixel 15 der jeweiligen Reihe von Pixeln 15. Die in den vergrößerten Ausschnitten notierten Ziffern von 1 bis 8, mit denen die verschiedenen Pixel 15 dort bezeichnet sind, geben dabei die Nummer der Untergruppe an, zu der das jeweilige Pixel 15 gehört, sowie die Nummer der Parallelprojektion an, die auf dieser Untergruppe von Pixeln 15 wiedergegeben wird.

Die spezielle Geometrie des vorliegenden Bildschirms führt nun dazu, dass das von einer einzelnen Untermenge der Untermengen von Pixeln ausgehende Licht jeweils in parallelen Strahlen bzw. Fächern durch das optische Raster fällt in einer Weise, die in Fig. 1 beispielhaft für n=8 veranschaulicht ist. Dadurch ergibt sich in einem verhältnismäßig großen Beobachtungsraum 16 vor dem Bildschirm, der in Fig. 1 schraffiert ist, ein Lichtfeld, das sehr ähnlich dem Lichtfeld ist, dass die wiedergegebene 3D-Szene in Realität verursachen würde. Ein Betrachter, der so platziert ist, dass seine Augen innerhalb dieses Beobachtungsraums 16 liegen, kann die 3D-Szene dadurch dreidimensional wahrnehmen, wobei er eine Mischung der verschiedenen Parallelprojektionen sieht, indem von verschiedenen Bereichen des Bildschirms Beiträge unterschiedlicher Parallelprojektionen in seine Augen fallen. Dabei sieht der Betrachter die 3D-Szene jeweils aus einer Perspektive, die seiner aktuellen Position innerhalb des Beobachtungsraums 16 entspricht und die sich bei einer Bewegung des Betrachters mit dieser Position ändert.

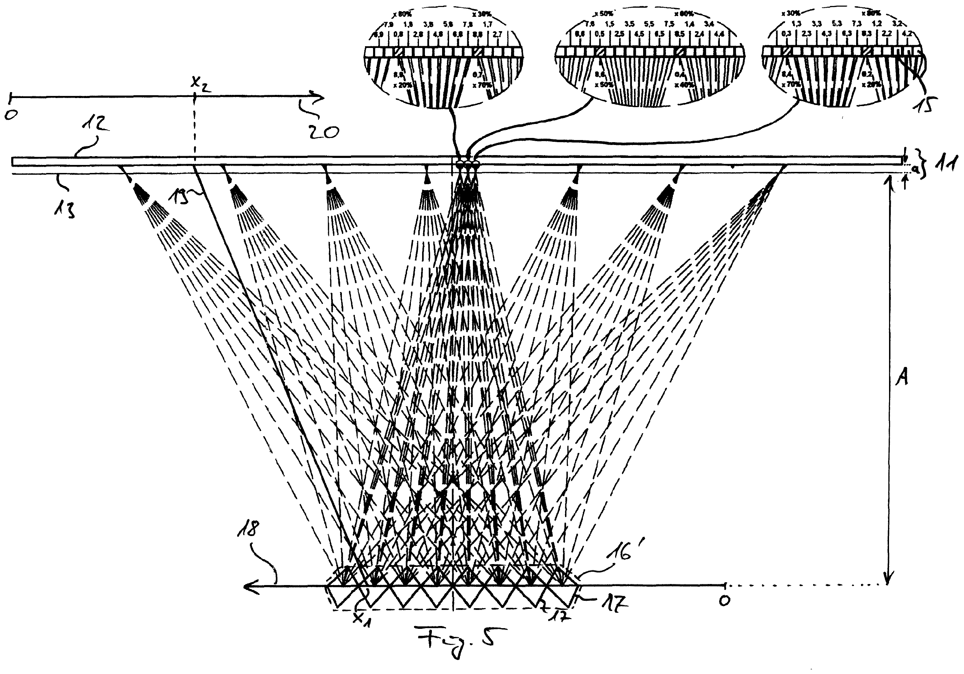

Hier soll nun eine andere Art der Ansteuerung des Bildschirms 11 aus Fig. 1 - analog anwendbar auch auf den Bildschirm aus Fig. 4 - beschrieben werden, die verbleichbar ist mit dem Betrieb eines herkömmlichen Multiview-Displays. Letzterer unterscheidet sich in einem Beispielfall von den hier beschriebenen Bildschirmen 11 durch eine andere Geometrie, die sich lediglich durch eine geringfügig geringere Periodenlänge D=8dA/(A+a) auszeichnet, wobei A eine Betrachtungsentfernung bezeichnet. Wenn bei dieser nur geringfügig anderen Geometrie auf jeder der acht Untermengen von Pixeln 15 eines von acht stereoskopischen Halbbildern wiedergegeben würde, die in dem Sinne zueinander komplementär sind, dass sie alle die gleiche Szene wiedergeben und jeweils anderen Blickrichtungen bzw. Kamerapositionen entsprechen, so dass sie sich paarweise zu einem Stereobild dieser Szene mit unterschiedlichen Parallaxenverschiebungen ergänzen, ergäbe sich eine Situation, die in Fig. 5 durch gestrichelte Linien veranschaulicht ist. Dann würden sich in der Betrachtungsentfernung A vor dem Bildschirm 11 acht nebeneinander liegende Betrachtungszonen 17 mit rautenförmigem Grundriss ergeben, die in Fig. 5 dargestellt sind und aus denen jeweils eines der Halbbilder sichtbar wäre. Ein seitlicher Versatz der unmittelbar benachbarten Betrachtungszonen entspräche dabei typischerweise ungefähr einem Augenabstand eines durchschnittlichen Augenpaars. Jeder Betrachter, der so vor dem Bildschirm 11 platziert wäre, dass sich seine Augen innerhalb eines durch die Betrachtungszonen 17 aufgespannten Bereichs und dort in zwei verschiedenen Betrachtungszonen 17befänden, könnte die Szene dadurch in einer dreidimensional erscheinenden Weise wahrnehmen.

Die in Fig. 5 in drei Blasen gezeigten Vergrößerung dreier Ausschnitte des Bildschirms 11 veranschaulichen, warum diese Art der Bildwiedergabe mit dem vorliegenden Bildschirm 11 nicht ohne weiteres möglich ist. Dort sind für einige ausgewählte Bereiche der Pixelmatrix 12 Ausschnitte einer Pixelzeile noch einmal vergrößert gezeigt. Durchgezogen sind in diesen Vergrößerungen die entsprechenden Abschnitte der tatsächlichen Strahlengänge aus Fig. 1 und Fig. 4 gezeigt. Dabei ist zu erkennen, dass die gestrichelt wiedergegebenen Strahlen, die mittig in die Betrachtungszonen 17 führen - und die wie alle in den Figuren wiedergegebenen Strahlen jeweils eine Mittellinie der entsprechenden endlich ausgedehnten Lichtbündel wiedergeben sollen -, nicht zentral von den Pixeln 15 ausgehen, sondern von Punkten, die gegenüber Mittelpunkten der Pixel 15 um verschiedene kleine Beträge seitlich verschoben sind. Das ist eine Folge des oben beschriebenen Zusammenhangs D=8d und - wegen der Abweichung von der für ein entsprechendes Multiview-Display eigentlich benötigten Zusammenhangs D=[8×A/(A+a)]×d - der Grund dafür, dass die im vorherigen Absatz beschriebene Art der Bildwiedergabe nicht ohne weiteres auf den vorliegenden Bildschirm 11 übertragbar ist.

Mit dem hier beschriebenen Bildschirm 11 wird nun ein Verfahren zum Wiedergeben von Bildinformationen durchgeführt, das zu einer dem herkömmlichen Betrieb eines herkömmlichen Multiview-Displays vergleichbaren Wirkung führt. Dazu wird zunächst eine spezielle Zuordnung vorgenommen, indem jeder der genannten Reihen jeweils ein erster Ortskoordinatenwert x₁ und jeweils ein zweiter Ortskoordinatenwert x₂ zugeordnet wird, wobei der erste Ortskoordinatenwert x₁ jeweils einen Ort auf einer im Betrachtungsabstand A vor dem Bildschirm 11 horizontal orientierten Koordinatenachse 18 angibt, an dem die durch das optische Raster 13 vorgegebene definierte Ausbreitungsebene des von der jeweiligen Reihe ausgehenden Lichts oder eine dieser Ausbreitungsebenen diese Koordinatenachse 18 schneidet, und wobei der zweite Ortskoordinatenwert x₂ eine Lage der jeweiligen Reihe oder der streifenförmigen Struktur des optischen Rasters 13, durch die das von den Pixeln 15 dieser Reihe ausgehende Licht fällt, in lateraler Richtung angibt. Für einen willkürlich herausgegriffenen einzigen mittig von einem der Pixel 15 augehenden Strahl 19 ist die Bestimmung des ersten Ortskoordinatenwertes x₁ und des zweiten Ortskoordinatenwertes x₂ in Fig. 5 beispielhaft veranschaulicht. Der zweite Ortskoordinatenwert x₂ kann dazu als Koordinate eines Schnittpunktes der jeweiligen Reihe oder streifenförmigen Struktur mit einer in Zeilenrichtung der Pixelmatrix 12 orientierten weiteren Koordinatenachse 20 bezüglich dieser weiteren Koordinatenachse 20 definiert werden. Die weitere Koordinatenachse 20 ist in Fig. 5 der Übersichtlichkeit halber etwas hinter die Pixelmatrix 12 versetzt wiedergegeben.

Die ersten Ortskoordinatenwerte x₁ nehmen bei dieser Zuordnung weit mehr als 8 verschiedene Werte an. Zur Veranschaulichung sind in Fig. 5 die in den dort vergrößert dargestellten Ausschnitten erkennbaren Pixel 15 jeweils mit dem über dem jeweilige Pixel 15 vermerkten ersten Ortskoordinatenwert x₁ gekennzeichnet, der der Reihe zugeordnet ist, zu der das jeweilige Pixel 15 gehört. Im vorliegenden Fall sind die ersten Ortskoordinatenwerte x₁ dabei so skaliert, dass acht unmittelbar benachbarten und mittig durch die Pixelmatrix 12 verlaufenden Reihen von Pixeln 15 die ersten Ortskoordinatenwerte x₁ 1, 2, 3, 4, 5, 6, 7 und 8 zugeordnet sind. In anderen Bereichen der Pixelmatrix 12 nehmen die ersten Ortskoordinatenwerte x₁ dagegen auch Zwischenwerte an.

Die Steuereinheit 14 ist zunächst dazu eingerichtet, die geschilderte Zuordnung von ersten Ortskoordinatenwerte x₁ und zweiten Ortskoordinatenwerte x₂ zu berechnen oder, falls diese Zuordnung schon an irgendeiner Stelle abgespeichert ist, diese Zuordnung auszuwerten.

Aufbauend darauf wird durch eine entsprechende Programmierung der Steuereinheit 14 für jede der Reihen durch eine Bildsynthese jeweils ein Auszug eines Bildes berechnet, wobei dieses Bild jeweils durch eine Perspektive des wiederzugebenden 3D-Bildes aus einer Position gegeben ist, die durch den der jeweiligen Reihe zugeordneten ersten Ortskoordinatenwert x₁ definiert ist, und wobei der Auszug jeweils durch einen Streifen dieses Bildes definiert ist, der in diesem Bild eine seitliche Lage hat, die dem der jeweiligen Reihe zugeordneten zweiten Ortskoordinatenwert x₂ entspricht. Dazu kann ein herkömmliches Render-Verfahren verwendet werden, wobei sich gegenüber herkömmlichen Anwendungen solcher Render-Verfahren oder Bildsynthese Verfahren kein rechnerischer Mehraufwand ergibt, weil die verhältnismäßig große Zahl von Bildern nicht vollständig berechnet werden, sondern nur die genannten streifenförmigen Auszüge, also jeweils verhältnismäßig kleine Teile dieser Bilder. Ausgangspunkt können jeweils Daten sein, die die 3D-Szene in herkömmlicher Weise definieren und die das verwendete Render-Verfahren bzw. die angewandte Bildsynthese in an sich bekannter Weise verarbeitet, um die benötigten Bilder zu erhalten, wenn auch nur jeweils auszugsweise.

Schließlich werden die Pixel 15 der Pixelmatrix 12 durch die dazu eingerichtete Steuereinheit 14 so angesteuert, dass in jede der Reihen der für die jeweilige Reihe berechnete Auszug eingeschrieben wird. Das Berechnen der Auszüge impliziert dabei das Ermitteln von Helligkeitswerten von Bildpunkten der Auszüge, wobei die Auszüge in die Reihen der Pixelmatrix 12 eingeschrieben werden, indem die die jeweilige Reihe bildenden Pixel 15 mit den für die Bildpunkte des jeweiligen Auszugs ermittelten und abhängig von der jeweiligen Grundfarbe definierten Helligkeitswerten angesteuert werden.

Durch diese Ansteuerung sehen die Augen eines Betrachters, der sich mit seinen Augen innerhalb eines in Fig. 5 gestrichelt eingezeichneten Beobachtungsraums 16' aufhält, jeweils Beiträge einer großen Zahl der oben genannten Auszüge und dementsprechend streng genommen eine Mischung aus verschiedenen Bildern, wobei diese Mischung wegen der nur geringen Perspektivunterschiede zwischen den darin enthaltenen Bildern jeweils ziemlich genau einer realistischen Perspektive entspricht und wobei sich die für die zwei Augen sichtbaren Perspektiven durch eine dem Augenabstand entsprechende Parallaxenverschiebung voneinander unterscheiden. So vermittelt der Bildschirm dem Betrachter an jedem beliebigen Ort innerhalb des Beobachtungsraums 16' einen dreidimensionalen Eindruck der wiedergegebenen 3D-Szene. Der Beobachtungsraum 16' entspricht dabei ungefähr einer konvexen Hülle der Betrachtungszonen 17. Er kann auch etwas größer sein, ist aber typischerweise weniger ausgedehnt als der Beobachtungsraum 16, der sich beim herkömmlichen Integral Imaging ergibt. Dafür sind aber die in beschriebener Weise wiedergebbaren 3D-Bilder weniger Einschränkungen insbesondere hinsichtlich der Bildtiefe unterworfen.

Da die ersten Ortskoordinatenwerte x₁, wie in Fig. 5 veranschaulicht, so genau und feinstufig berechnet und den Reihen dementsprechend so zugeordnet werden, dass den verschiedenen Reihen eine Anzahl von weit mehr als acht verschiedenen ersten Ortskoordinatenwerten x₁ zugeordnet werden, werden auch die für die Reihen berechneten Auszüge aus einer entsprechend großen Anzahl von weit mehr als acht verschiedenen Bildern mit einer entsprechenden Anzahl von weit mehr als acht verschiedenen Perspektiven berechnet.

Der Betrachtungsabstand A ist variabel und kann auf einen zumindest innerhalb gewisser Grenzen frei wählbaren Wert festgelegt werden. Dabei kann die Steuereinheit 14 zum Beispiel eingerichtet sein, die Pixelmatrix 12 abhängig von einem den Betrachtungsabstand A definierenden Eingabebefehl anzusteuern. Es ist aber auch möglich, dass der Bildschirm 11 zusätzlich eine hier nicht dargestellte Trackingeinrichtung aufweist, die einen Abstand eines Betrachterkopfes vom Bildschirm 11 erfasst und an die Steuereinheit 14 übergibt, die den Betrachtungsabstand A dann dem gemessenen Abstand entsprechend definiert und die Pixelmatrix 12 davon abhängig anzusteuert.

Da das optische Raster 13 eine Vielzahl der streifenförmigen Strukturen - also im vorliegenden Fall eine Vielzahl nebeneinander liegender Zylinderlinsen oder in einer der genannten Abwandlungen eine Vielzahl von nebeneinander liegenden Schlitzen - aufweist, durch die das von den Pixeln 15 ausgehende Licht fallen kann, gibt das optische Raster dem von den Pixeln 15 jeder der Reihen ausgehenden Licht jeweils nicht nur eine, sondern eine endliche Zahl verschiedener Ausbreitungsebenen mit dementsprechend verschiedenen horizontalen Ausbreitungsrichtungen vor. Das hat zur Folge, dass die beschriebenen Maßnahmen zur Ansteuerung der Pixelmatrix noch einen gewissen Spielraum bei der Bestimmung der den Reihen zuzuordnenden ersten Ortskoordinatenwerte x₁ zulassen. Dieser Spielraum kann übrigens genutzt werden, um den Beobachtungsraum 16' innerhalb gewisser Grenzen auch seitlich zu verschieben.

Zum Bestimmen des der jeweiligen Reihe zugeordneten ersten Ortskoordinatenwerts x₁ wird dabei aus den verschiedenen Ausbreitungsebenen, in denen das von der jeweiligen Reihe ausgehende Licht durch das Raster 13 fallen kann, eine Ausbreitungsebene ausgewählt wird durch Einhalten einer Nebenbedingung, die verlangt, dass der erste Ortskoordinatenwert x₁ innerhalb eines definierten Intervalls liegt. Dieses Intervall wird einfach so definiert, dass es auf der Koordinatenachse 18 innerhalb des Beobachtungsraums 16' liegt und dass seine Intervallgrenzen zumindest ungefähr seitlichen Begrenzungen des Beobachtungsraums 16' entsprechen.

Die ersten Ortskoordinatenwerte x₁ werden den Reihen dabei jeweils so zugeordnet werden, dass die Reihen auf Gruppen von jeweils acht oder neun oder in Einzelfällen unter Umständen auch zehn unmittelbar benachbarten Reihen verteilt sind, innerhalb derer die den Reihen der jeweiligen Gruppe zugeordneten ersten Ortskoordinatenwerte x₁ sich von Reihe zu Reihe um eine für alle Gruppen gleiche Ortskoordinatendifferenz von im vorliegenden Fall eins oder geringfügig mehr als eins unterscheiden, wobei die ersten Ortskoordinatenwerte x₁, die den Reihen jeder dieser Gruppen zugeordnet sind, jeweils ein Koordinatenintervall überspannen, das mindestens achtmal so groß ist wie die genannte Ortskoordinatendifferenz. Das ist in Fig. 5 in den drei vergrößerten Ausschnitten gut zu erkennen.

Bei einer speziellen Variante der hier beschriebenen Ansteuerung der Pixelmatrix 12 werden zumindest einige der Reihen, die an einem Rand einer der genannten Gruppen von Reihen liegen, zusätzlich auch der sich an diesem Rand der Gruppe anschließenden benachbarten Gruppe von Reihen zugeordnet. Diesen Reihen, von denen in den noch einmal vergrößerten Ausschnitten aus Fig. 5 insgesamt sechs zu sehen sind und deren dort erkennbare Pixel 15 in Fig. 5 schraffiert dargestellt sind, werden dementsprechend zwei erste Ortskoordinatenwerte x₁ zugeordnet, die durch zwei der Ausbreitungsebenen definiert werden. Diese zwei ersten Ortskoordinatenwerte x₁ sind für die sechs in Fig. 5 erkennbaren Fälle in der dort gewählten Skalierung in einem Fall 0,8 und 8,9, in einem anderen Fall 0,7 und 8,8, in einem dritten Fall 0,5 und 8,6, in einem vierten Fall 0,4 und 8,5, in einem fünften Fall 0,3 und 8,4 und in einem sechsten Fall 0,2 und 8,3. Einer der beiden der jeweiligen Reihe zugeordneten ersten Koordinatenwerte x₁ ist dabei unter das jeweilige Pixel 15 geschrieben. Diese doppelte Zuordnung wird dabei genau bei den Reihen vorgenommen, die bei dem gewählten bzw. angestrebten Beobachtungsraum 16' gerade so liegen, dass das von dort ausgehende Licht durch zwei benachbarte Strukturen des optischen Rasters 13 das optische Raster 13 jeweils so verlässt, dass es genau oder fast genau an zwei seitlichen Begrenzungen des Beobachtungsraums 16' in den Beobachtungsraum 16' fällt. Je nachdem, mit welcher der zwei in Frage kommenden Ausbreitungsrichtungen das Licht weiter in den Betrachtungsraum 16' hineinfällt, kann einer oder der anderen dieser Ausbreitungsrichtungen, wie in Fig. 5 angedeutet, eine größere oder eine kleinere Gewichtung, also ein größerer oder kleinerer Wichtungsfaktor, zugeordnet werden. Die Wichtungsfaktoren sind in Fig. 5 jeweils durch eine Prozentzahl zum jeweiligen ersten Ortskoordinatenwert x₁ dazugeschrieben. Für jede dieser ausgewählten Reihen werden nun jeweils zwei Auszüge unter Zugrundelegung jeweils eines der beiden ersten Ortskoordinatenwert x₁, die der jeweiligen Reihe zugeordnet sind, berechnet, wobei die Pixel 15 dieser Reihen jeweils mit einem gemittelten Helligkeitswert angesteuert werden. Dabei wird dieser gemittelte Helligkeitswert durch Mitteln von Helligkeitswerten ermittelt, die durch diese beiden Auszüge definiert werden, wobei diese Helligkeitswerte mit den genannten Gewichtungen oder Wichtungsfaktoren, die sich zu 100% ergänzen, gewichtet werden. Durch diese Maßnahme können störende Artefakte abgemildert oder verhindert werden, die sich sonst durch Übersprechen insbesondere bei einer Betrachtung des Bildschirms 11 aus einer Position nahe der seitlichen Begrenzungen des Beobachtungsraums 16' ergeben können.

Die genannten gemittelten Helligkeitswerte, mit denen die Pixel 15 der Reihen angesteuert werden, denen zwei erste Ortskoordinatenwerte x₁ zugeordnet und für die zwei Auszüge berechnet werden, werden also in diesem Fall ermittelt als Summe aus einem mit einem ersten Wichtungsfaktor gewichteten ersten Helligkeitswert und einem mit einem zweiten Wichtungsfaktor gewichteten zweiten Helligkeitswert, wobei der erste Helligkeitswert jener Helligkeitswert ist, der durch einen ersten der zwei Auszüge für das jeweilige Pixel 15 definiert ist, während der zweite Helligkeitswert der ist, der durch den zweiten dieser zwei Auszüge für dasselbe Pixel 15 definiert ist. Der erste Wichtungsfaktor und der zweite Wichtungsfaktor werden dabei durch eine entsprechende Programmierung der Steuereinheit 14 für jede der betroffenen Reihen von Pixeln 15 jeweils abhängig davon definiert, wie nah der jeweilige Ortskoordinatenwert x₁ an einer Grenze des oben genannten Intervalls liegt, das im vorliegenden Fall als von 0,1 bis 8,9 reichend definiert ist. So ergibt sich eine besonders störungsarme Bildwiedergabe.

Der jeweils für eine der Reihen definierte erste Wichtungsfaktor ist dabei umso kleiner, je näher der erste Ortskoordinatenwert x₁, unter Zugrundelegung dessen der erste Auszug berechnet wird, an einer Intervallgrenze des genannten Intervalls liegt, während der für die jeweilige Reihe definierte zweite Wichtungsfaktor umso kleiner ist, je näher der erste Ortskoordinatenwert x₁, unter Zugrundelegung dessen der zweite Auszug berechnet wird, an einer Intervallgrenze des genannten Intervalls liegt. Der zweite Wichtungsfaktor ist dabei umso größer, je kleiner der erste Wichtungsfaktor ist, und vice versa.

## Patentansprüche

1. Verfahren zum Wiedergeben von Bildinformationen auf einem autostereoskopischen Bildschirm (11), der eine Pixelmatrix (12) mit einer Vielzahl von Pixeln (15) sowie ein vor der Pixelmatrix (12) angeordnetes optisches Raster (13) aufweist, wobei die Pixel (15) der Pixelmatrix (12) so angeordnet sind, dass sie eine Vielzahl von äquidistant nebeneinander angeordneten Reihen mit einer vertikalen oder gegenüber einer Vertikalen geneigten Reihenrichtung bilden, und wobei das optische Raster (13) eine Schar von parallel zu den Reihen orientierten und äquidistant nebeneinander angeordneten streifenförmigen Strukturen aufweist und von den Pixeln (15) ausgehendem Licht jeweils mindestens eine definierte Ausbreitungsebene vorgibt, die aus einer definierten horizontalen Ausbreitungsrichtung und der Reihenrichtung aufgespannt wird, wobei eine durch einen seitlichen Versatz benachbarter streifenförmiger Strukturen definierte Periodenlänge (D) des optischen Rasters (13) um einen ganzzahligen Faktor n größer ist als ein seitlicher Versatz (d) der unmittelbar benachbarten Reihen, wobei n größer als zwei ist, wobei die Pixelmatrix (12) für eine autostereoskopische Betrachtung eines 3D-Bildes aus einem Betrachtungsabstand (A) vor dem Bildschirm (11) angesteuert wird und wobei das Verfahren folgende Schritte umfasst:
- Zuordnen jeweils eines ersten Ortskoordinatenwertes (x₁) und eines zweiten Ortskoordinatenwertes (x₂) zu jeder der genannten Reihen, wobei der erste Ortskoordinatenwert (x₁) jeweils einen Ort auf einer im Betrachtungsabstand (A) vor dem Bildschirm (11) horizontal orientierten Koordinatenachse (18) angibt, an dem die durch das optische Raster (13) vorgegebene definierte Ausbreitungsebene des von der jeweiligen Reihe ausgehenden Lichts oder eine dieser Ausbreitungsebenen diese Koordinatenachse (18) schneidet, und wobei der zweite Ortskoordinatenwert (x₂) eine Lage der jeweiligen Reihe oder der streifenförmigen Struktur des optischen Rasters (13), durch die das von den Pixeln (15) dieser Reihe ausgehende Licht fällt, in lateraler Richtung angibt, wobei der erste Ortskoordinatenwert (x₁) für jede der Reihen jeweils so genau bestimmt wird, dass den verschiedenen Reihen eine Anzahl von mehr als n verschiedenen ersten Ortskoordinatenwerten (x₁) zugeordnet wird,
- für jede der Reihen Berechnen jeweils eines Auszugs eines Bildes durch Bildsynthese, wobei dieses Bild jeweils durch eine Perspektive des wiederzugebenden 3D-Bildes aus einer Position gegeben ist, die durch den der jeweiligen Reihe zugeordneten ersten Ortskoordinatenwert (x₁) definiert ist, und wobei der Auszug jeweils durch einen Streifen dieses Bildes definiert ist, der in diesem Bild eine seitliche Lage hat, die dem der jeweiligen Reihe zugeordneten zweiten Ortskoordinatenwert (x₂) entspricht, so dass die Auszüge, die für die verschiedenen Reihen berechnet werden, Auszüge einer Anzahl von mehr als n verschiedenen Bildern mit einer entsprechenden Anzahl verschiedener Perspektiven sind, wobei die Anzahl der verschiedenen Bilder und Perspektiven der Anzahl der verschiedenen ersten Ortskoordinatenwerte (x₁) entspricht,
- Ansteuern der Pixel (15) der Pixelmatrix (12) derart, dass in jede der Reihen der so für diese Reihe berechnete Auszug eingeschrieben wird.

2. Verfahren nach Anspruch 1, **dadurch gekennzeichnet, dass** das optische Raster (13) dem von den Pixeln (15) jeder Reihe oder von den Pixeln (15) einiger der Reihen ausgehenden Licht jeweils eine endliche Zahl verschiedener Ausbreitungsebenen mit dementsprechend verschiedenen horizontalen Ausbreitungsrichtungen vorgibt, die sich dadurch ergeben, dass das Licht durch verschiedene der streifenförmigen Strukturen des optischen Rasters (13) fällt, wobei zum Bestimmen des der jeweiligen Reihe zugeordneten ersten Ortskoordinatenwerts (x₁) aus diesen Ausbreitungsebenen eine Ausbreitungsebene ausgewählt wird durch Einhalten einer Nebenbedingung, die verlangt, dass der erste Ortskoordinatenwert (x₁) innerhalb eines definierten Intervalls liegt.

3. Verfahren nach Anspruch 2, **dadurch gekennzeichnet, dass** die ersten Ortskoordinatenwerte (x₁) den Reihen so zugeordnet werden, dass die Reihen auf Gruppen von jeweils n oder n+1 oder n+2 unmittelbar benachbarten Reihen verteilt sind, innerhalb derer die den Reihen der jeweiligen Gruppe zugeordneten ersten Ortskoordinatenwerte (x₁) sich von Reihe zu Reihe um eine für alle Gruppen gleiche Ortskoordinatendifferenz unterscheiden, wobei die ersten Ortskoordinatenwerte (x₁), die den Reihen jeder dieser Gruppen zugeordnet sind, jeweils ein Koordinatenintervall überspannen, das mindestens n-mal so groß ist wie die genannte Ortskoordinatendifferenz.

4. Verfahren nach Anspruch 3, **dadurch gekennzeichnet, dass** zumindest einige der Reihen, die an einem Rand einer der genannten Gruppen von Reihen liegen, zusätzlich der sich an diesem Rand der Gruppe anschließenden benachbarten Gruppe von Reihen zugeordnet werden und dass diesen Reihen dementsprechend zwei erste Ortskoordinatenwerte (x₁) zugeordnet werden, die durch zwei der Ausbreitungsebenen definiert werden, wobei für diese Reihen dementsprechend jeweils zwei Auszüge unter Zugrundelegung jeweils eines dieser beiden ersten Ortskoordinatenwerte (x₁) berechnet werden und wobei die Pixel (15) dieser Reihen jeweils mit einem gemittelten Helligkeitswert angesteuert werden, der sich durch Mitteln von Helligkeitswerten ergibt, die durch diese beiden Auszüge definiert werden.

5. Verfahren nach Anspruch 4, **dadurch gekennzeichnet, dass** die gemittelten Helligkeitswerte, mit denen die Pixel (15) der Reihen angesteuert werden, denen zwei erste Ortskoordinatenwerte (x₁) zugeordnet und für die zwei Auszüge berechnet werden, jeweils ermittelt werden als Summe aus einem mit einem ersten Wichtungsfaktor gewichteten ersten Helligkeitswert und einem mit einem zweiten Wichtungsfaktor gewichteten zweiten Helligkeitswert, wobei der erste Helligkeitswert durch einen ersten der zwei Auszüge für das jeweilige Pixel (15) definiert ist und der zweite Helligkeitswert durch den zweiten dieser zwei Auszüge für dasselbe Pixel (15) definiert ist.

6. Verfahren nach Anspruch 5, **dadurch gekennzeichnet, dass** der erste Wichtungsfaktor und der zweite Wichtungsfaktor jeweils abhängig davon definiert werden, wie nah der jeweilige erste Ortskoordinatenwert (x₁) an einer Grenze des genannten Intervalls liegt.

7. Autostereoskopischer Bildschirm (11), der eine Pixelmatrix (12) mit einer Vielzahl von Pixeln (15), ein vor der Pixelmatrix (12) angeordnetes optisches Raster (13) und eine Steuereinheit (14) zum Ansteuern der Pixelmatrix (12) aufweist,
wobei die Pixel (15) der Pixelmatrix (12) so angeordnet sind, dass sie eine Vielzahl von äquidistant nebeneinander angeordneten Reihen mit einer vertikalen oder gegenüber einer Vertikalen geneigten Reihenrichtung bilden,
wobei das optische Raster (13) eine Schar von parallel zu den Reihen orientierten und äquidistant nebeneinander angeordneten streifenförmigen Strukturen aufweist und von den Pixeln (15) ausgehendem Licht jeweils mindestens eine definierte Ausbreitungsebene vorgibt, die aus einer definierten horizontalen Ausbreitungsrichtung und der Reihenrichtung aufgespannt wird, wobei eine durch einen seitlichen Versatz benachbarter streifenförmiger Strukturen definierte Periodenlänge (D) des optischen Rasters (13) um einen ganzzahligen Faktor n größer ist als ein seitlicher Versatz (d) der unmittelbar benachbarten Reihen, wobei n größer als zwei ist,
und wobei die Steuereinheit (14) eingerichtet ist, die Pixelmatrix (12) für eine autostereoskopische Betrachtung eines 3D-Bildes aus einem Betrachtungsabstand (A) vor dem Bildschirm (11) anzusteuern und dazu folgende Schritte durchzuführen:
- Berechnen oder Auswerten einer Zuordnung, die jeder der genannten Reihen jeweils einen ersten Ortskoordinatenwert (x₁) und einen zweiten Ortskoordinatenwert (x₂) zuordnet, wobei der erste Ortskoordinatenwert (x₁) jeweils einen Ort auf einer im Betrachtungsabstand (A) vor dem Bildschirm (11) horizontal orientierten Koordinatenachse (18) angibt, an dem die durch das optische Raster (13) vorgegebene definierte Ausbreitungsebene des von der jeweiligen Reihe ausgehenden Lichts oder eine dieser Ausbreitungsebenen diese Koordinatenachse (18) schneidet, und wobei der zweite Ortskoordinatenwert (x₂) eine Lage der jeweiligen Reihe oder der streifenförmigen Struktur des optischen Rasters (13), durch die das von den Pixeln (15) dieser Reihe ausgehende Licht fällt, in lateraler Richtung angibt, wobei die genannte Zuordnung den verschiedenen Reihen eine Anzahl verschiedener erster Ortskoordinatenwerte (x₁) zuordnet, die größer ist als n,
- für jede der Reihen Berechnen jeweils eines Auszugs eines Bildes durch Bildsynthese, wobei dieses Bild jeweils durch eine Perspektive des wiederzugebenden 3D-Bildes aus einer Position gegeben ist, die durch den der jeweiligen Reihe zugeordneten ersten Ortskoordinatenwert (x₁) definiert ist, und wobei der Auszug jeweils durch einen Streifen dieses Bildes definiert ist, der in diesem Bild eine seitliche Lage hat, die dem der jeweiligen Reihe zugeordneten zweiten Ortskoordinatenwert (x₂) entspricht, so dass die für die verschiedenen Reihen berechneten Auszüge Auszüge einer Anzahl von mehr als n verschiedenen Bildern mit einer entsprechenden Anzahl verschiedener Perspektiven sind, wobei die Anzahl der verschiedenen Bilder und Perspektiven der Anzahl der verschiedenen ersten Ortskoordinatenwerte (x₁) entspricht,
- Ansteuern der Pixel (15) der Pixelmatrix (12) derart, dass in jede der Reihen der für diese Reihe berechnete Auszug eingeschrieben wird.

8. Autostereoskopischer Bildschirm (11) nach Anspruch 7, **dadurch gekennzeichnet, dass** das optische Raster (13) dem von den Pixeln (15) jeder Reihe oder von den Pixeln (15) einiger der Reihen ausgehenden Licht jeweils eine endliche Zahl verschiedener Ausbreitungsebenen mit dementsprechend verschiedenen horizontalen Ausbreitungsrichtungen vorgibt, die sich dadurch ergeben, dass das Licht durch verschiedene der streifenförmigen Strukturen des optischen Rasters (13) fällt, wobei der der jeweiligen Reihe zugeordnete erste Ortskoordinatenwert (x₁) innerhalb eines definierten Intervalls liegt.

9. Autostereoskopischer Bildschirm (11) nach Anspruch 8, **dadurch gekennzeichnet, dass** die ersten Ortskoordinatenwerte (x₁) den Reihen so zugeordnet sind, dass die Reihen auf Gruppen von jeweils n oder n+1 oder n+2 unmittelbar benachbarten Reihen verteilt sind, innerhalb derer die den Reihen der jeweiligen Gruppe zugeordneten ersten Ortskoordinatenwerte (x₁) sich von Reihe zu Reihe um eine für alle Gruppen gleiche Ortskoordinatendifferenz unterscheiden, wobei die ersten Ortskoordinatenwerte (x₁), die den Reihen jeder dieser Gruppen zugeordnet sind, jeweils ein Koordinatenintervall überspannen, das mindestens n-mal so groß ist wie die genannte Ortskoordinatendifferenz.

10. Autostereoskopischer Bildschirm (11) nach Anspruch 9, **dadurch gekennzeichnet, dass** zumindest einige der Reihen, die an einem Rand einer der genannten Gruppen von Reihen liegen, zusätzlich der sich an diesem Rand der Gruppe anschließenden benachbarten Gruppe von Reihen zugeordnet sind und dass diesen Reihen dementsprechend zwei erste Ortskoordinatenwerte (x₁) zugeordnet sind, die durch zwei der Ausbreitungsebenen definiert sind, wobei die Steuereinheit (14) eingerichtet ist, für diese Reihen dementsprechend jeweils zwei Auszüge unter Zugrundelegung jeweils eines dieser beiden ersten Ortskoordinatenwerte (x₁) zu berechnen und die Pixel (15) dieser Reihen jeweils mit einem gemittelten Helligkeitswert anzusteuern, der sich durch Mitteln von Helligkeitswerten ergibt, die durch diese beiden Auszüge definiert werden.

11. Autostereoskopischer Bildschirm (11) nach Anspruch 10, **dadurch gekennzeichnet, dass** die Steuereinheit (14) eingerichtet ist, die genannten gemittelten Helligkeitswerte für die Pixel (15) der Reihen, denen zwei erste Ortskoordinatenwerte (x₁) zugeordnet sind, jeweils zu ermitteln als Summe aus einem mit einem ersten Wichtungsfaktor gewichteten ersten Helligkeitswert und einem mit einem zweiten Wichtungsfaktor gewichteten zweiten Helligkeitswert, wobei der erste Helligkeitswert durch einen ersten der zwei Auszüge für das jeweilige Pixel (15) definiert ist und der zweite Helligkeitswert durch den zweiten dieser zwei Auszüge für dasselbe Pixel (15) definiert ist.

12. Autostereoskopischer Bildschirm (11) nach Anspruch 11, **dadurch gekennzeichnet, dass** die Steuereinheit (14) eingerichtet ist, den ersten Wichtungsfaktor und der zweiten Wichtungsfaktor jeweils abhängig davon zu definieren, wie nah der jeweilige erste Ortskoordinatenwert (x₁) an einer Grenze des genannten Intervalls liegt.

13. Autostereoskopischer Bildschirm (11) nach einem der Ansprüche 11 oder 12, **dadurch gekennzeichnet, dass** die Steuereinheit (14) eingerichtet ist, den jeweils für eine der Reihen definierten ersten Wichtungsfaktor umso kleiner zu definieren, je näher der erste Ortskoordinatenwert (x₁), unter Zugrundelegung dessen der erste Auszug berechnet wird, an einer Intervallgrenze des genannten Intervalls liegt, und den für die jeweilige Reihe definierten zweiten Wichtungsfaktor umso kleiner zu definieren, je näher der erste Ortskoordinatenwert (x₁), unter Zugrundelegung dessen der zweite Auszug berechnet wird, an einer Intervallgrenze des genannten Intervalls liegt.

## Claims

1. A method for reproducing picture information on an autostereoscopic screen (11) which comprises a pixel matrix (12) with a multitude of pixels (15), as well as an optical grid (13) which is arranged in front of the pixel matrix (12), wherein the pixels (15) of the pixel matrix (12) are arranged such that they form a multitude of rows which are arranged equidistantly next to one another and are with a vertical row direction or one which is inclined with respect to a vertical, and wherein the optical grid (13) comprises a family of strip-like structures which are orientated parallel to the rows and are arranged equidistantly next one another and in each case sets at least one defined propagation plane for light departing from the pixels (15), said propagation plane spanned from a defined horizontal propagation direction and the row direction, wherein a period length (D) of the optical grid (13) which is defined by a lateral offset of adjacent, strip-like structures is larger than a lateral offset (d) of the directly adjacent rows by an integer factor n, wherein n is larger than two, wherein the pixel matrix (12) is activated for an autostereoscopic viewing of a 3D picture from a viewing distance (A) in front of the screen (11), and wherein the method comprises the following steps:
- assigning in each case a first local coordinate value (x₁) and a second local coordinate value (x₂) to each of the mentioned rows, wherein the first local coordinate value (x₁) in each case specifies a location on a coordinate axis (18) which is horizontally orientated at the viewing distance (A) in front of the screen (11), at which location the defined propagation plane, set by the optical grid, of the light departing from the respective row, or one of these propagation planes, intersects this coordinate axis (18), and wherein the second local coordinate value (x₂), in the lateral direction specifies a position of the respective row or of the strip-like structure of the optical grid (13), through which position the light departing from the pixels (15) of this row falls, wherein the first local coordinate value (x₁) in each case is determined in such a precise manner that a number of different first local coordinate values (x₁) which is greater than n is assigned to the different rows,
- for each of the rows, computing in each case an extract of a picture by way of picture synthesis, wherein this picture is given in each case by a perspective of the 3D picture to be reproduced, from a position which is defined by the first local coordinate value (x₁) assigned to the respective row, and wherein the extract is defined in each case by a strip of this picture which in this picture has a lateral position corresponding to the second local coordinate value (x₂) assigned to the respective row, so that the extracts which are computed for the different rows are extracts of more than n different pictures with a corresponding number of different perpectives, the number of different pictures and perspectives corresponding to the number of different first local coordinate values (x₁),
- activating the pixels (15) of the pixel matrix (12) in a manner such that the extract computed in such a manner for this row is written into each of the rows.

2. The method according to claim 1, **characterised in that** the optical grid (13) in each case sets a finite number of different propagation planes with accordingly different horizontal propagation directions for the light departing from the pixels (15) of each row or from the pixels (15) of some of the rows, and these propagation directions result due to the fact that the light falls through different ones of the strip-like structures of the optical grid (13), wherein a propagation plane is selected from these propagation planes by way of keeping a constraint which demands that the first local coordinate value (x₁) lies within a defined interval, in order to determine the first local coordinate value (x₁) assigned to the respective row.

3. The method according to claim 2, **characterised in that** the first local coordinate values (x₁) are assigned to the rows such that the rows are distributed onto groups of in each case n or n+1 or n+2 directly adjacent rows, within which the first local coordinate values (x₁) assigned to the rows of the respective group differ from row to row by a local coordinate difference which is the same for all groups, wherein the first local coordinate values (x₁) which are assigned to the rows of each of these groups, in each case span a coordinate interval which is at least n-times as large as the mentioned local coordinate difference.

4. The method according to claim 3, **characterised in that** at least some of the rows which lie at an edge of one of the mentioned groups of rows, are additionally assigned to the adjacent group of rows which connects to this edge of the group, and that two first local coordinate values (x₁) which are defined by two of the propagation planes are accordingly assigned to these rows, wherein accordingly two extracts in each case are computed for these rows on the basis of in each case one of these two first local coordinate values (x₁), and wherein the pixels (15) of these rows are activated in each case with an averaged brightness value which results by way of averaging brightness values which are defined by these two extracts.

5. The method according to claim 4, **characterised in that** the averaged brightness values, with which the pixels (15) of the rows are activated, to which rows two first local coordinate values (x₁) are assigned and for which rows two extracts are computed, are determined in each case as the sum of a first brightness value weighted by a first weighting factor and of a second brightness value weighted by a second weighting factor, wherein the first brightness value is defined by a first of the two extracts for the respective pixel (15), and the second brightness value is defined by the second of these two extracts for the same pixel (15).

6. The method according to claim 5, **characterised in that** the first weighting factor and the second weighting factor are defined in each case in a manner depending on how close the respective first local coordinate value (x₁) lies to a boundary of the mentioned interval.

7. An autostereoscopic screen (11) which comprises a pixel matrix (12) with a multitude of pixels (15), an optical grid (13) which is arranged in front of the pixel matrix (12), and a control unit (14) for activating the pixel matrix (12),
wherein the pixels (15) of the pixel matrix (12) are arranged such that they form a multitude of rows which are arranged equidistantly next to one another and are with a vertical row direction or one which is inclined with respect to a vertical,
wherein the optical grid (13) comprises a family of strip-like structures which are orientated parallel to the rows and are arranged equidistantly next one another and in each case sets at least one defined propagation plane for light departing from the pixels (15), said propagation plane being spanned from a defined horizontal propagation direction and the row direction, wherein a period length (D) of the optical grid (13) which is defined by a lateral offset of adjacent, strip-like structures is greater than a lateral offset (d) of the directly adjacent rows by an integer factor n, wherein n is larger than two
and wherein the control unit (14) is configured to activate the pixel matrix (12) for an autostereoscopic viewing of a 3D picture at a viewing distance (A) in front of the screen (11) and, for this, to carry out the following steps:
- computing or evaluating an assignment, which assigns in each case a first local coordinate value (x₁) and a second local coordinate value (x₂) to each of the mentioned rows, wherein the first local coordinate value (x₁) in each case specifies a location on a coordinate axis (18) which is horizontally orientated at the viewing distance (A) in front of the screen (11), at which location the defined propagation plane, set by the optical grid, of the light departing from the respective row, or one of these propagation planes, intersects this coordinate axis (18), and wherein the second local coordinate value (x₂), in the lateral direction specifies a position of the respective row or of the strip-like structure of the optical grid (13), through which position the light departing from the pixels (15) of this row falls, the mentioned assignment assigns a number of different first local coordinate values (x₁) to the different rows, said number being greater than n,
- for each of the rows, computing in each case an extract of a picture by way of picture synthesis, wherein this picture is given in each case by a perspective of the 3D picture to be reproduced, from a position which is defined by the first local coordinate value (x₁) assigned to the respective row, and wherein the extract is defined in each case by a strip of this picture which in this picture has a lateral position corresponding to the second local coordinate value (x₂) assigned to the respective row, so that the extracts computed for the different rows are extracts of more than n different pictures with a corresponding number of different perspectives, the number of different pictures and perspectives corersponding to the number of different first local coordinates values (x₁),
- activating the pixels (15) of the pixel matrix (12) in a manner such that the extract computed for this row is written into each of the rows.

8. The autostereoscopic screen (11) according to claim7, **characterised in that** the optical grid (13) in each case sets a finite number of different propagation planes with accordingly different horizontal propagation directions for the light departing from the pixels (15) of each row or from the pixels (15) of some of the rows, said propagation directions resulting due to the fact that the light falls through different ones of the strip-like structures of the optical grid (13), wherein the first local coordinate value (x₁) assigned to the respective row lies within a defined interval.

9. The autostereoscopic screen (11) according to claim 8, **characterised in that** the first local coordinate values (x₁) are assigned to the rows such that the rows are distributed onto groups of in each case n or n+1 or n+2 directly adjacent rows, within which the first local coordinate values (x₁) assigned to the rows of the respective group differ from row to row by a local coordinate difference which is the same for all groups, wherein the first local coordinate values (x₁) which are assigned to the rows of each of these groups, in each case span a coordinate interval which is at least n-times larger than the mentioned local coordinate difference.

10. The autostereoscopic screen (11) according to claim 9, **characterised in that** at least some of the rows which lie at an edge of one of the mentioned groups of rows, are additionally assigned to the adjacent group of rows which connects to this edge of the group and that accordingly two first local coordinate values (x₁) defined by two of the propagation planes are assigned to these rows, wherein the control unit (14) is configured, for these rows, to accordingly compute in each case two extracts on the basis of in each case one of these two first local coordinate values (x₁) and to activate the pixels (15) of these rows in each case with an averaged brightness value which results by way of averaging brightness values which are defined by these two extracts.

11. The autostereoscopic screen (11) according to claim 10, **characterised in that** the control unit (14) is configured to determine the mentioned averaged brightness values for the pixels (15) of the rows, to which two first local coordinate values (x₁) are assigned, in each case as a sum of a first brightness value weighted by a first weighting factor and a second brightness value weighted by a second weighting factor, wherein the first brightness value is defined by a first of the two extracts for the respective pixel (15) and the second brightness value is defined by the second of these two extracts for the same pixel (15).

12. The autostereoscopic screen (11) according to claim 11, **characterised in that** the control unit (14) is configured to define the first weighting factor and the second weighting factor in each case in a manner depending on how close the respective first local coordinate value (x₁) lies to a boundary of the mentioned interval.

13. The autostereoscopic screen (11) according to one of claims 11 or 12, **characterised in that** the control unit (14) is configured to define the first weighting factor defined in each case for one of the rows, smaller, the closer the first local coordinate value (x₁), on the basis of which the first extract is computed, lies to an interval boundary of the mentioned interval, and to define the second weighting factor defined for the respective row, smaller, the closer the first local coordinate value (x₁), on the basis of which the second extract is computed, lies to an interval boundary of the mentioned interval.

## Revendications

1. Procédé de reproduction d'informations graphiques sur un écran auto-stéréoscopique (11), qui comprend une matrice de pixels (12) avec une pluralité de pixels (15) ainsi qu'un trame optique (13) disposée devant la matrice de pixels (12), les pixels (15) de la matrice de pixels (12) étant disposés de façon à former une pluralité de rangées disposées de manière équidistante entre elles avec une direction verticale ou inclinée par rapport à la verticale et la trame optique (13) comprenant un groupe de structures en forme de bandes parallèles aux rangées et juxtaposées de manière équidistante entre elles et donnant à la lumière sortant de chacun des pixels (15) au moins un plan de propagation défini, formé par une direction de propagation horizontale et la direction des rangées, une longueur de période (D) de la trame optique (13), définie par un décalage latéral de structures en forme de bandes adjacentes étant supérieure d'un facteur entier n à un décalage latéral (d) entre des rangées immédiatement adjacentes, n étant supérieur à deux, la matrice de pixels (12) étant contrôlé, pour une observation auto-stéréoscopique d'une image 3D, à partir d'une distance d'observation (A) devant l'écran (11) et le procédé comprenant les étapes suivantes :
- l'attribution d'une première valeur de coordonnées locale (x₁) et d'une deuxième valeur de coordonnées locale (x₂) à chacune des rangées mentionnées, la première valeur de coordonnées locale (x₁) indiquant un lieu sur un axe de coordonnées (18) orienté horizontalement à une distance d'observation (A) devant l'écran (11), au niveau duquel le plan de propagation défini, prédéterminé par la trame optique, de la lumière sortant de la rangée correspondante, ou un de ces plans de propagation, coupe cet axe de coordonnées (18) et la deuxième valeur de coordonnées locale (x₂) indiquant une position, dans la direction latérale, de la rangée correspondante ou de la structure en forme de bande de la trame optique (13), que traverse la lumière sortant des pixels (15) de cette rangée, la première valeur de coordonnées locale (x₁) étant déterminée de manière tellement exacte pour chacune des rangées, qu'aux différentes rangées soit attribué un nombre supérieur à n de différentes premières valeurs de coordonnées locale (x₁),
- pour chacune des rangées, le calcul d'un extrait d'une image par synthèse d'image, cette image étant donnée par une perspective de l'image 3D à partir d'une position qui est définie par la première valeur de coordonnées locale (x₁) attribuée à la rangée correspondante, et l'extrait étant défini par une bande de cette image, qui présente, dans cette image, une position latérale, qui correspond à la deuxième valeur de coordonnées locale (x₂) attribuée à la rangée correspondante, de façon à ce que les extraits qui sont calculés pour les différentes rangées soient des extraits d'un nombre supérieur à n d'images différentes avec un nombre correspondant de perspectives différentes, le nombre d'images et de perspectives différentes correspondant au nombre des différentes premières valeurs de coordonnées locales (x₁),
- le contrôle des pixels (15) de la matrice de pixels (12) de façon à ce que l'extrait calculé pour cette rangée est inscrit dans chacune des rangées.

2. Procédé selon la revendication 1, **caractérisé en ce que** la trame optique (13) détermine, pour la lumière sortant des pixels (15) sortant de chaque rangée ou des pixels (15) de certaines rangées, un nombre fini de plans de propagation différents avec des directions de propagation horizontales différentes, qui résultent du fait que la lumière traverse différentes structures en forme de bandes de la trame optique (13), moyennant quoi, pour la détermination de la première valeur de coordonnées locale (x₁) attribuée à la rangée correspondante, parmi ces plans de propagation, un plan de propagation est sélectionné en respectant une condition secondaire qui exige que la première valeur de coordonnées locale (x₁) se trouve dans un intervalle défini.

3. Procédé selon la revendication 2, **caractérisé en ce que** les premières valeurs de coordonnées locales (x₁) sont attribuées aux rangées de façon à ce que les rangées soient réparties dans des groupes de n ou n+1 ou n+2 rangées immédiatement adjacentes, à l'intérieur desquels les premières valeurs de coordonnées locales (x₁) attribuées aux rangées du groupe correspondant soient différentes d'une rangée à l'autre d'une différence de coordonnée locale identique pour tous les groupes, les premières valeurs de coordonnées locales (x₁) attribuées aux rangées de chacun de ces groupes formant chacune un intervalle de coordonnées qui est au moins n fois plus grand que la différence de coordonnées locales mentionnée.

4. Procédé selon la revendication 3, **caractérisé en ce qu'**au moins certaines des rangées qui se trouvent au niveau d'un bord d'un des groupes de rangées mentionnés, sont en outre attribuées au groupe de rangées adjacent raccordé à ce bord du groupe et **en ce qu'**à ces rangées sont attribuées en conséquence deux premières valeurs de coordonnées locales (x₁), qui sont définies par deux des plans de propagation, moyennant quoi, pour ces rangées, deux extraits sont calculés sur la base d'une de ces deux premières valeurs de coordonnées locales (x₁) et les pixels (15) de ces rangées sont contrôlés chacun avec une valeur de luminosité moyenne qui résulte du calcul de la moyenne des valeurs de luminosité définies par ces deux extraits.

5. Procédé selon la revendication 4, **caractérisé en ce que** les valeurs de luminosité moyennées avec lesquelles les pixels (15) des rangées sont contrôlés, auxquelles sont attribuées deux premières valeurs de coordonnées (x₁) et pour lesquelles deux extraits sont calculés, sont déterminées chacune comme la somme d'une première valeur de luminosité pondérée avec un premier facteur de pondération et d'une deuxième valeur de luminosité pondérée avec un deuxième facteur de pondération, la première valeur de luminosité étant définie par un premier des deux extraits pour le pixel (15) correspondant et la deuxième valeur de luminosité étant définie par le deuxième de ces deux extraits pour le même pixel (15).

6. Procédé selon la revendication 5, **caractérisé en ce que** le premier facteur de pondération et le deuxième facteur de pondération sont définis en fonction de la proximité de la première valeur de coordonnées locale (x₁) par rapport à une limite de l'intervalle mentionné.

7. Écran auto-stéréoscopique (11) qui comprend une matrice de pixels (12) avec une pluralité de pixels (15), une trame optique (13) disposée devant la matrice de pixels (12) et une unité de commande (14) pour le contrôle de la matrice de pixels (12),
les pixels (15) de la matrice de pixels (12) étant disposés de façon à former une pluralité de rangées disposées de manière équidistante entre elles avec une direction verticale ou inclinée par rapport à la verticale,
la trame optique (13) comprenant un groupe de structures en forme de bandes parallèles aux rangées et juxtaposées de manière équidistante entre elles et donnant à la lumière sortant de chacun des pixels (15) au moins un plan de propagation défini, formé par une direction de propagation horizontale et la direction des rangées, une longueur de période (D) de la trame optique (13), définie par un décalage latéral de structures en forme de bandes adjacentes étant supérieure d'un facteur entier n à un décalage latéral (d) entre des rangées immédiatement adjacentes, n étant supérieur à deux,
et l'unité de commande (14) étant conçue pour contrôler la matrice de pixels (12), pour une observation auto-stéréoscopique d'une image 3D, à partir d'une distance d'observation (A) devant l'écran (11) et pour exécuter les étapes suivantes :
- calcul ou analyse d'une attribution qui attribue à chacune des rangées mentionnées une première valeur de coordonnées locale (x₁) et une deuxième valeur de coordonnées locale (x₂), la première valeur de coordonnées locale (x₁) indiquant un lieu sur un axe de coordonnées (18) orienté horizontalement à une distance d'observation (A) devant l'écran (11), au niveau duquel le plan de propagation défini, prédéterminé par la trame optique (13), de la lumière sortant de la rangée correspondante, ou un de ces plans de propagation, coupe cet axe de coordonnées (18) et la deuxième valeur de coordonnées locale (x₂) indiquant une position, dans la direction latérale, de la rangée correspondante ou de la structure en forme de bande de la trame optique (13), que traverse la lumière sortant des pixels (15) de cette rangée, l'attribution mentionnée aux différentes rangées attribuant un nombre supérieur à n de premières valeurs de coordonnées locales (x₁),
- pour chacune des rangées, le calcul d'un extrait d'une image par synthèse d'image, cette image étant donnée par une perspective de l'image 3D à partir d'une position qui est définie par la première valeur de coordonnées locale (x₁) attribuée à la rangée correspondante, et l'extrait étant défini par une bande de cette image, qui présente, dans cette image, une position latérale, qui correspond à la deuxième valeur de coordonnées locale (x₂) attribuée à la rangée correspondante, de façon à ce que les extraits qui sont calculés pour les différentes rangées soient des extraits d'un nombre supérieur à n d'images différentes avec un nombre correspondant de perspectives différentes, le nombre d'images et de perspectives différentes correspondant au nombre des différentes premières valeurs de coordonnées locales (x₁),
- le contrôle des pixels (15) de la matrice de pixels (12) de façon à ce que l'extrait calculé pour cette rangée est inscrit dans chacune des rangées.

8. Écran auto-stéréoscopique (11) selon la revendication 7, **caractérisé en ce que** la trame optique (13) détermine, pour la lumière sortant des pixels (15) sortant de chaque rangée ou des pixels (15) de certaines rangées, un nombre fini de plans de propagation différents avec des directions de propagation horizontales différentes, qui résultent du fait que la lumière traverse différentes structures en forme de bandes de la trame optique (13), moyennant quoi la première valeur de coordonnées locale (x₁) attribuée à la rangée correspondante se trouve dans un intervalle défini.

9. Écran auto-stéréoscopique (11) selon la revendication 8, **caractérisé en ce que** les premières valeurs de coordonnées locales (x₁) sont attribuées aux rangées de façon à ce que les rangées soient réparties dans des groupes de n ou n+1 ou n+2 rangées immédiatement adjacentes, à l'intérieur desquels les premières valeurs de coordonnées locales (x₁) attribuées aux rangées du groupe correspondant soient différentes d'une rangée à l'autre d'une différence de coordonnée locale identique pour tous les groupes, les premières valeurs de coordonnées locales (x₁) attribuées aux rangées de chacun de ces groupes formant chacune un intervalle de coordonnées qui est au moins n fois plus grand que la différence de coordonnées locales mentionnée.

10. Écran auto-stéréoscopique (11) selon la revendication 9, **caractérisé en ce qu'**au moins certaines des rangées qui se trouvent au niveau d'un bord d'un des groupes de rangées mentionnés, sont en outre attribuées au groupe de rangées adjacent raccordé à ce bord du groupe et **en ce qu'**à ces rangées sont attribuées en conséquence deux premières valeurs de coordonnées locales (x1), qui sont définies par deux des plans de propagation, moyennant quoi l'unité de commande (14) est conçue pour calculer, pour chacune de ces rangées, deux extraits sur la base d'une de ces deux premières valeurs de coordonnées locales (x1) et pour contrôler les pixels (15) de ces rangées chacun avec une valeur de luminosité moyenne qui résulte du calcul de la moyenne des valeurs de luminosité définies par ces deux extraits.

11. Écran auto-stéréoscopique (11) selon la revendication 10, **caractérisé en ce que** l'unité de commande (14) est conçue pour déterminer les valeurs de luminosité moyennées mentionnée pour les pixels (15) des rangées, auxquelles sont attribuées deux premières valeurs de coordonnées (x₁) chacune comme la somme d'une première valeur de luminosité pondérée avec un premier facteur de pondération et d'une deuxième valeur de luminosité pondérée avec un deuxième facteur de pondération, la première valeur de luminosité étant définie par un premier des deux extraits pour le pixel (15) correspondant et la deuxième valeur de luminosité étant définie par le deuxième de ces deux extraits pour le même pixel (15).

12. Écran auto-stéréoscopique (11) selon la revendication 11, **caractérisé en ce que** l'unité de commande (14) est conçue pour définir le premier facteur de pondération et le deuxième facteur de pondération en fonction de la proximité de la première valeur de coordonnées locale (x₁) par rapport à une limite de l'intervalle mentionné.

13. Écran auto-stéréoscopique (11) selon l'une des revendications 11 ou 12, **caractérisé en ce que** l'unité de commande (14) est conçue pour définir le premier facteur de pondération défini pour une des rangées d'autant plus petit que la première valeur de coordonnées locale (x₁), sur la base de laquelle est calculé le premier extrait, est proche d'une limite de l'intervalle mentionné et pour définir le deuxième facteur de pondération d'autant plus petit que la première valeur de coordonnées locale (x₁), sur la base de laquelle est calculé le deuxième extrait, est proche d'une limite de l'intervalle mentionné.
